(19) Europäisches Patentamt / European Patent Office / Office européen des brevets

(11) **EP 4 615 135 A1**

(12) **EUROPEAN PATENT APPLICATION**
published in accordance with Art. 153(4) EPC

(43) Date of publication:
**10.09.2025 Bulletin 2025/37**

(21) Application number: 23885440.0

(22) Date of filing: **04.10.2023**

(51) International Patent Classification (IPC):
**H04W 74/08** (2024.01)   **H04W 28/18** (2009.01)
**H04W 72/1268** (2023.01)   **H04W 72/54** (2023.01)

(52) Cooperative Patent Classification (CPC):
**H04W 28/18; H04W 72/1268; H04W 72/54;
H04W 74/08**

(86) International application number:
**PCT/JP2023/036280**

(87) International publication number:
**WO 2024/095677 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 JP 2022177132**

(71) Applicant: **Panasonic Intellectual Property
Corporation
of America
Torrance, CA 90504 (US)**

(72) Inventors:
• **YAMAMOTO, Tetsuya
  Kadoma-shi, Osaka 571-0057 (JP)**
• **SUZUKI, Hidetoshi
  Kadoma-shi, Osaka 571-0057 (JP)**
• **TRAN, Xuan Tuong
  Singapore 469332 (SG)**

(74) Representative: **Grünecker Patent- und
Rechtsanwälte
PartG mbB
Leopoldstraße 4
80802 München (DE)**

(54) **TERMINAL, BASE STATION, COMMUNICATION METHOD, AND INTEGRATED CIRCUIT**

(57)    This terminal is provided with: a control circuit that, on the basis of a condition related to repeated transmission of a first signal, executes transmission control with respect to a second signal; and a transmission circuit that transmits the second signal in accordance with the transmission control.

200

CONTROLLER → TRANSMITTER

FIG. 3

EP 4 615 135 A1

**Description**

Technical Field

The present disclosure relates to a terminal, a base station, a communication method, and an integrated circuit.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.
The 3rd Generation Partnership Project (3GPP) as an international standardizing body has been specifying New Radio (NR) as one of 5G radio interfaces.

Citation List

Non-Patent Literature (hereinafter referred to as "NPL")

NPL 1
3GPP TS38.104 V15.18.0, "NR Base Station (BS) radio transmission and reception (Release 15)," September 2022.
NPL 2
RP-202928, "New WID on NR coverage enhancements," China Telecom, December 2020.
NPL 3
RP-220937, "Revised WID on Further NR coverage enhancements," China Telecom, March 2022.
NPL 4
3GPP TS38.211 V17.3.0, "NR Physical channels and modulation (Release 17)," September 2022.
NPL 5
3GPP TS38.212 V17.3.0, "NR Multiplexing and channel coding (Release 17)," September 2022.
NPL 6
3GPP TS38.213 V17.3.0, "NR Physical layer procedures for control (Release 17)," September 2022.
NPL 7
3GPP TS38.214 V17.3.0, "NR Physical layer procedures for data (Release 17)," September 2022.

Summary of Invention

There is, however, room for consideration on a method for transmitting a signal in the uplink.
A non-limiting embodiment of the present disclosure facilitates providing a terminal, a base station, a communication method, and an integrated circuit each capable of improving the reception performance of a signal in the uplink.
A terminal according to an embodiment of the present disclosure includes: control circuitry, which, in operation, performs transmission control of a certain signal based on a condition related to repetition transmission of a first signal, the certain signal being referred to as a second signal; and transmission circuitry, which, in operation, transmits the second signal in accordance with the transmission control.
It should be noted that general or specific embodiments may be implemented as a system, a method, an integrated circuit, a computer program, a storage medium, or any selective combination thereof.
According to an embodiment of the present disclosure, a signal can be appropriately transmitted in the uplink.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating an example of request condition for Message 3 (Msg.3) Physical Uplink Shared Channel (PUSCH) repetition and an example of Modulation and Coding Scheme (MCS) field;
FIG. 2 is a block diagram illustrating a configuration example of a part of a base station;
FIG. 3 is a block diagram illustrating a configuration example of a part of a terminal;
FIG. 4 is a diagram illustrating an example of the relationship between received quality and the configuration of Repetition and MCS;
FIG. 5 is a flowchart illustrating an operation example of the terminal;
FIG. 6 is a diagram illustrating exemplary configuration values of the number of Repetitions and the MCS index;
FIG. 7 is a diagram illustrating an example of relationship between received quality and the configurations of Repetition and MCS;
FIG. 8 is a flowchart illustrating an exemplary operation of the terminal;
FIG. 9 is a diagram illustrating an example of relationship between received quality and the configurations of Repetition and MCS;
FIG. 10 is a flowchart illustrating an exemplary operation of the terminal;
FIG. 11 is a diagram illustrating exemplary configuration values of the number of Repetitions and the MCS index, and scaling factors;
FIG. 12 is a block diagram illustrating an exemplary configuration of the base station;
FIG. 13 is a block diagram illustrating an exemplary configuration of the terminal;
FIG. 14 is a diagram illustrating an exemplary relationship between received quality and the configurations of Repetition and MCS;
FIG. 15 is a diagram illustrating an exemplary architecture of a 3GPP NR system;
FIG. 16 is a schematic diagram illustrating a functional split between NG-RAN and 5GC;
FIG. 17 is a sequence diagram of a procedure for Radio Resource Control (RRC) connection setup/reconfiguration;
FIG. 18 schematically illustrates usage scenarios of enhanced Mobile BroadBand (eMBB), massive Machine Type Communications (mMTC), and Ultra Reliable and Low Latency Communications (URLLC); and
FIG. 19 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as Frequency Range 2 (FR2)) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure appropriate communication quality when the high frequency band is used compared with LTE or 3G. For example, in 3GPP Release 17 (for example, referred to as "Rel. 17") and Release 18 (for example, referred to as "Rel. 18"), methods for improving coverage in NR have been studied (see, for example, NPLs 2 and 3).

[Random Access Procedure]

In NR, a terminal (for example, also referred to as user equipment (UE)) transmits a random access channel (RACH) to a base station (for example, also referred to as gNB) in cases such as in the initial access (for example, transition from RRC IDLE state to RRC CONNECTED state), when returning from RRC INACTIVE state to RRC CONNECTED state, when downlink data or uplink data is generated during connection (when the uplink synchronization state is non-synchronized in RRC CONNECTED state), when requesting on-demand System Information (SI), or when recovering from a beam connection failure (Beam failure recovery). This causes a connection from the terminal to the base station or re-synchronization establishment to be attempted.

The series of operations performed for connection or re-synchronization establishment from a terminal to a base station is also referred to as a "Random access procedure" and may be composed of the following four steps in NR (see, for example, NPL 6).

<Step 1: Transmission of Message 1 (Msg.1) or RACH preamble>

For example, the terminal randomly selects a RACH preamble resource to be actually used from a group of resource candidates (for example, defined by a combination of time resources, frequency resources, and sequence resources) used for the transmission of a RACH preamble. The terminal then transmits a signal of a Physical Random Access Channel (PRACH) using the selected RACH preamble resource. Here, the RACH preamble is also referred to as "Message 1 (Msg.1)." Further, the transmission of the RACH preamble is also referred to as "PRACH transmission."

<Step 2: Transmission of Message 2 (Msg.2)>

The base station transmits a RACH response (RAR: Random Access Response) when, for example, detecting a RACH preamble. At this point, the base station cannot identify the terminal that has transmitted the RACH preamble. Thus, the RAR is transmitted to the entire cell covered by the base station. The RAR may include, for example, information on a resource to be used by the terminal in the uplink (transmission of Message 3 in Step 3 described later) or information on the transmission timing of the uplink by the terminal. Here, the RAR is also referred to as "Message 2 (Msg.2)."

Note that, in a case where the terminal that has transmitted the RACH preamble does not receive the RAR within a predetermined period (for example, RAR reception window) from the transmission timing of the RACH preamble, the terminal may select a RACH preamble resource again and transmit a RACH preamble again (retransmission of Message 1).

<Step 3: Transmission of Message 3 (Msg.3)>

The terminal transmits a signal (for example, referred to as Message 3 (Msg.3)) including an RRC connection request or a scheduling request using an uplink resource indicated by the base station, for example, by RAR. Here, the uplink data channel (for example, PUSCH: Physical Uplink Shared Channel) used for the transmission of Message 3 is also referred to as "Msg.3 PUSCH."

<Step 4: Transmission of Message 4 (Msg.4)>

For example, the base station transmits, to the terminal, a message (for example, referred to as Message 4 (Msg.4)) including identification information (for example, UE-ID) for identifying the terminal. The base station confirms, by transmitting Message 4, that a plurality of terminals is not in contention (contention resolution). Note that, for example, a Cell-Radio Network Temporary Identifier (C-RNTI) or a Temporary C-RNTI (TC-RNTI) may be used as a UD-ID.

The Random access procedure has been described above.

In NR Rel. 17, repetition transmission for Msg.3 PUSCH is applied as one of the coverage enhancement techniques for the uplink (see, for example, NPLs 6 and 7). The terminal, for example, measures the received quality and determines that the coverage enhancement of Msg.3 is necessary when the received quality is equal to or less than a threshold (for example, "rsrp-ThresholdMsg3"), and requests Msg.3 PUSCH repetition from the base station.

Note that the received quality may be, for example, Reference Signal Received Power (RSRP), Reference Signal Received Quality (RSRQ), or Signal to Interference and Noise Ratio (SINR).

Further, in a case where Msg.3 PUSCH repetition is requested, the terminal may use, for example, a RACH resource different from an existing RACH resource configured for the terminal. Thus, the base station can identify a terminal that requests Msg.3 PUSCH repetition.

The base station may determine whether to actually apply Repetition to a terminal that requests Msg.3 PUSCH repetition, based on, for example, information including the received quality of the RACH preamble. Further, the base station determines the number of Repetitions based on, for example, information including the received quality of the RACH preamble, and indicates the terminal of the determined number of Repetitions through uplink allocation information (for example, UL grant) included in the RAR.

In Rel. 17, the number of Repetitions of Msg.3 PUSCH is indicated by reusing the Modulation and Coding Scheme (MCS) field of the UL grant. For example, for a terminal that requests Msg.3 PUSCH repetition, the number of Repetitions is indicated using 2 bits of the Most Significant Bit (MSB), and the MCS index is indicated using 2 bits of the Least Significant Bit (LSB) among 4 bits of the MCS field in the RAR UL grant. At this time, there are respectively four candidates for configuration values of the number of Repetitions and the MCS index that can be indicated by the UL grant. Candidates for the configuration values of the number of Repetitions and the MCS index may be configured in the terminal by, for example, a System Information Block (SIB).

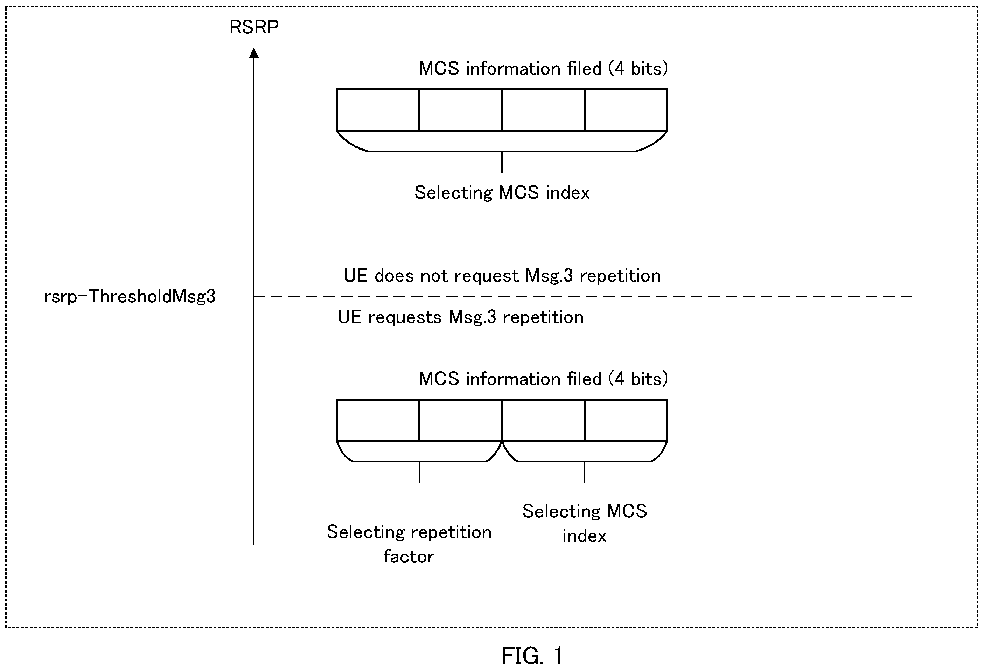

FIG. 1 is a diagram illustrating an example of a condition for requesting Msg.3 PUSCH repetition in Rel. 17 and a method of using an MCS field (for example, MCS information field) of an RAR UL grant for scheduling Msg.3 PUSCH.

As illustrated in FIG. 1, in a case where the received quality (for example, RSRP) is greater than a threshold (for example, rsrp-ThresholdMsg3), the terminal does not request Msg.3 PUSCH repetition and selects (or acquires, selects) the MCS index using four bits of the MCS field. Further, as illustrated in FIG. 1, in a case where the RSRP is equal to or less than threshold rsrp-ThresholdMsg3, the terminal requests Msg.3 PUSCH repetition, selects the number of Repetitions (for example, repetition factor) using two bits of the MCS field (for example, two bits of MSB), and selects the MCS index using the remaining two bits (for example, two bits of LSB).

In NR Rel. 18, in order to further improve the uplink coverage, the application of repetition transmission of PRACH (for example, also referred to as "multiple PRACH transmission" or "PRACH repetition") in addition to Msg.3 PUSCH is being considered, for example.

For example, there is room for consideration regarding the operation related to Msg.3 PUSCH transmission (for example, method for controlling transmission of Msg.3 PUSCH) in a terminal in a case where multiple PRACH transmission or PRACH repetition is applied.

For example, in a case where the terminal measures the received quality (for example, RSRP, RSRQ, or SINR), and the measured received quality is equal to or less than a threshold, the terminal may be assumed to determine that the coverage enhancement of PRACH is necessary and to transmit PRACH by applying multiple PRACH transmission or PRACH repetition. In this case, the interrelationship between the condition (for example, received quality) for the terminal to apply multiple PRACH transmission or PRACH repetition and the condition (for example, received quality) for the terminal to request Msg.3 PUSCH repetition is unclear.

For example, it can be assumed that the condition (for example, received quality) for the terminal to apply multiple PRACH transmission or PRACH repetition and the condition for the terminal to request Msg.3 PUSCH repetition are configured to be the same. However, since the condition under which coverage enhancement is required may differ between PRACH and Msg.3 PUSCH, Repetition is possibly applied to transmissions for which coverage enhancement is not required, which possibly results in degradation in the spectral efficiency of the uplink.

In a non-limiting embodiment of the present disclosure, a method will be described in which a terminal transmits Msg.3 PUSCH using the appropriate number of Repetitions or MCS in a case where multiple PRACH transmission or PRACH repetition is applied.

For example, the interrelationship between a condition (for example, a condition related to received quality) under which the terminal applies multiple PRACH transmission or PRACH repetition and a condition (for example, a condition related to received quality) under which the terminal requests Msg.3 PUSCH repetition (or a condition for switching a method for determining the number of Repetitions or MCS of Msg.3 PUSCH repetition) may be characterized. According to a non-limiting embodiment of the present disclosure, in an environment where a terminal applies multiple PRACH transmission or PRACH repetition, the terminal can transmit Msg.3 PUSCH using the appropriate the number of Repetitions or MCS.

Further, for example, in a non-limiting embodiment of the present disclosure, the terminal can transmit Msg.3 PUSCH with the number of Repetitions or MCS suitable for an environment in which multiple PRACH transmission or PRACH repetition is applied by allowing a method for determining the numbers of Repetitions or MCSs of a plurality of Msg.3 PUSCH repetitions (for example, candidates for a plurality of configuration values (for example, a configured set)).

Hereinafter, non-limiting embodiments of the present disclosure will be described.

[Overview of Communication System]

A communication system according to each embodiment of the present disclosure includes, for example, at least one base station and at least one terminal.

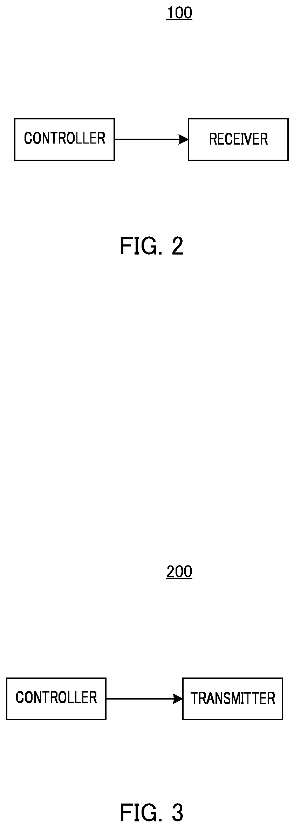

FIG. 2 is a block diagram illustrating a configuration example of a part of base station 100 according to an embodiment of the present disclosure, and FIG. 3 is a block diagram illustrating a configuration example of a part of terminal 200 according to an embodiment of the present disclosure.

In base station 100 illustrated in FIG. 2, a controller (corresponding to, for example, control circuitry) performs reception control of a second signal (for example, Msg.3 PUSCH) based on a condition related to the repetition transmission of a first signal (for example, PRACH). A receiver (for example, reception circuitry) receives a second signal in accordance with the reception control.

In terminal 200 illustrated in FIG. 3, a controller (for example, corresponding to control circuitry) performs transmission control of a second signal (for example, Msg.3 PUSCH) based on a condition related to the repetition transmission of a first signal (for example, PRACH). A transmitter (corresponding to, for example, transmission circuitry) transmits a second signal in accordance with the transmission control.

(Embodiment 1)

In the present embodiment, terminal 200 measures received quality (for example, RSRP, RSRQ, or SINR), and in a case where the measured received quality is equal to or less than a threshold for PRACH (for example, "rsrp-ThresholdPRACHrepetition"), terminal 200 determines that coverage enhancement for PRACH is necessary, and applies multiple PRACH transmission or PRACH repetition to transmit PRACH. On the other hand, when the received quality is greater than the threshold for PRACH, terminal 200 transmits PRACH without applying PRACH repetition.

Further, terminal 200 measures, for example, received quality (for example, RSRP, RSRQ, or SINR), and in a case where the measured received quality is equal to or less than a threshold for Msg.3 (for example, "rsrp-ThresholdMsg3"), terminal 200 determines that coverage enhancement for Msg.3 is necessary, and requests Msg.3 PUSCH repetition from base station 100. On the other hand, when the received quality is greater than the threshold for Msg.3 PUSCH, terminal 200 does not request Msg.3 PUSCH repetition from base station 100.

In general, Msg.3 PUSCH is a channel for which coverage enhancement is desired more than PRACH. Accordingly, in a case where terminal 200 applies multiple PRACH transmission or PRACH repetition, that is, in a case where coverage improvement for PRACH is determined to be necessary, it is highly likely that coverage improvement is also necessary for Msg.3 PUSCH.

Then, in the present embodiment, the threshold for PRACH (for example, rsrp-ThresholdPRACHrepetition) may be set to a value that does not exceed the threshold for Msg.3 (for example, rsrp-ThresholdMsg3). For example, the relationship may be rsrp-ThresholdPRACHrepetition < rsrp-ThresholdMsg3.

For example, when terminal 200 transmits PRACH by applying multiple PRACH transmission or PRACH repetition, terminal 200 also requests Msg.3 PUSCH repetition from base station 100. That is, when terminal 200 transmits PRACH by applying multiple PRACH transmission or PRACH repetition, terminal 200 determines that coverage enhancement of Msg.3 is necessary.

As described above, terminal 200 may perform transmission control of Msg.3 PUSCH (for example, control of Msg.3 PUSCH repetition) based on a condition related to the repetition transmission of PRACH (for example, a condition related to received quality). For example, when the received quality (for example, RSRP) is equal to or less than the threshold rsrp-ThresholdPRACHrepetition, terminal 200 may determine to request Msg.3 PUSCH repetition in addition to the application of multiple PRACH transmission or PRACH repetition.

Further, for example, in the present embodiment, base station 100 indicates, to terminal 200 that has requested Msg.3 PUSCH repetition, the number of Repetitions using 2 bits of the MSB and the MCS index using 2 bits of the LSB among the four bits of MCS field of the RAR UL grant, regardless of whether multiple PRACH transmission or PRACH repetition is applied,. Further, in a case where terminal 200 requests, for example, Msg.3 PUSCH repetition, terminal 200 determines the number of Msg.3 PUSCH repetitions based on one or some of the bits (for example, 2-bit MSB) in the MCS field included in the RAR UL grant for Msg.3 PUSCH, and determines the MCS index based on the remaining bits (for example, 2-bit LSB) in the MCS field, regardless of whether multiple PRACH transmissions or PRACH repetitions is performed.

Note that, the numbers of candidates for the configuration values of the number of Repetitions and the MCS index that can be indicated by the UL grant are four each, and these may be configured in terminal 200 by SIB.

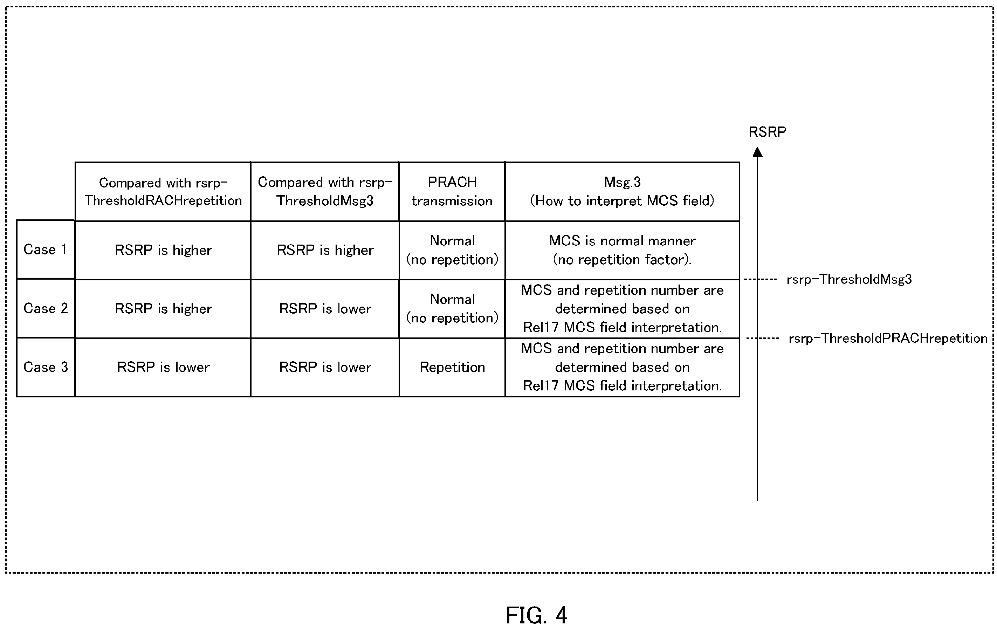

FIG. 4 is a diagram illustrating an example of the interrelationship between the received quality to which multiple PRACH transmission or PRACH repetition is applied, the received quality for which terminal 200 requests Msg.3 PUSCH repetition, and the method for determining the number of Repetitions and the MCS of Msg.3 PUSCH repetition in the present embodiment.

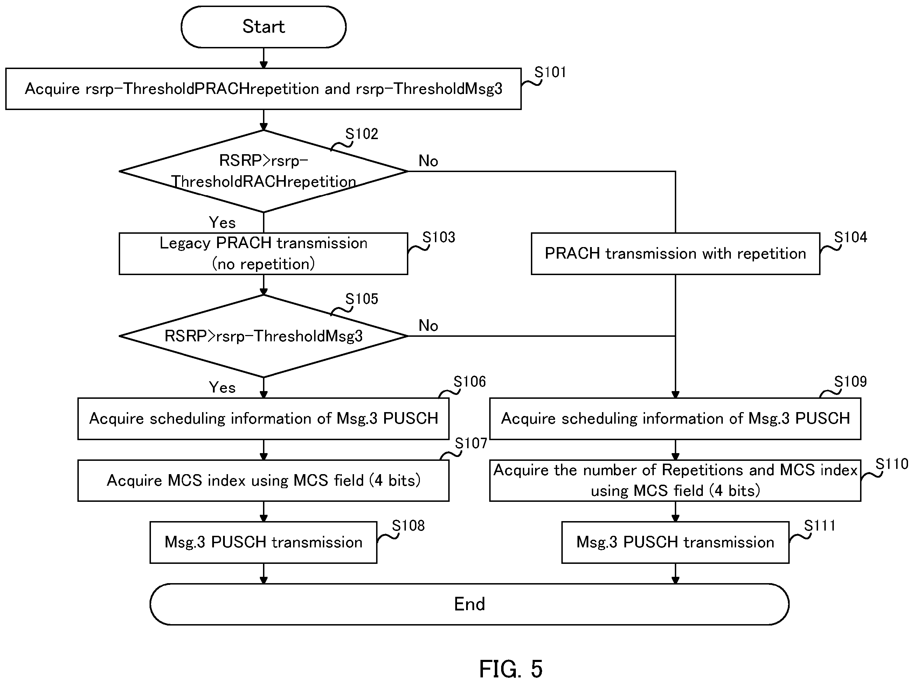

FIG. 5 is a flowchart illustrating an operation example of terminal 200.

In FIG. 5, terminal 200 acquires control information from base station 100 (S101). The control information may include, for example, information on received quality to which multiple PRACH transmission or PRACH repetition is applied (for example, rsrp-ThresholdPRACHrepetition), and information on received quality for which Msg.3 PUSCH repetition is requested (for example, rsrp-ThresholdMsg3).

Terminal 200 measures the received quality (for example, RSRP) and determines whether the measured RSRP is greater than threshold rsrp-ThresholdPRACHrepetition (S102). Further, terminal 200 determines whether the measured RSRP is greater than threshold rsrp-ThresholdMsg3 (S105).

<Case 1 in FIG. 4>

For example, in a case where the RSRP is greater than the threshold rsrp-ThresholdPRACHrepetition (S102: Yes) and the RSRP is greater than the threshold rsrp-ThresholdMsg3 (S105: Yes), terminal 200 does not apply multiple PRACH transmission or PRACH repetition (for example, applies legacy PRACH transmission) (S103). Further, in this case, terminal 200 does not request Msg.3 PUSCH repetition from base station 100. Further, terminal 200 acquires, for example, scheduling information of Msg.3 PUSCH (for example, RAR UL grant) (S106), acquires an MCS index using the four bits of the MCS field in the scheduling information (S107), and transmits Msg.3 PUSCH (S108).

<Case 2 in FIG. 4>

For example, in a case where the RSRP is greater than rsrp-ThresholdPRACHrepetition (S102: Yes) and the RSRP is equal to or less than threshold rsrp-ThresholdMsg3 (S105: No), terminal 200 does not apply multiple PRACH transmission or PRACH repetition (for example, applies legacy PRACH transmission) (S103). Further, in this case, terminal 200 requests Msg.3 PUSCH repetition from base station 100. Further, terminal 200 acquires, for example, the scheduling information of Msg.3 PUSCH (for example, RAR UL grant) (S109), acquires the number of Repetitions and the MCS index using the four bits of the MCS field in the scheduling information (S110), and transmits Msg.3 PUSCH (S111).

<Case 3 in FIG. 4>

Further, for example, in a case where the RSRP is equal to or less than rsrp-ThresholdPRACHrepetition (S102: No), terminal 200 applies multiple PRACH transmission or PRACH repetition (S104) and requests Msg.3 PUSCH repetition from base station 100. Further, terminal 200 acquires, for example, the scheduling information of Msg.3 PUSCH (for example, RAR UL grant) (S109), acquires the number of Repetitions and the MCS index using the four bits of the MCS field in the scheduling information (S110), and transmits Msg.3 PUSCH (S111).

For example, in a case where the number of Repetitions and the MCS index are acquired using the four bits of the MCS field (S 110 in FIG. 5), the number of Repetitions may be indicated to terminal 200 using two bits (for example, 2-bit MSB) of the MCS field of the RAR UL grant, and the MCS index may be indicated using the remaining two bits (for example, 2-bit LSB) of the MCS field.

As described above, in the present embodiment, terminal 200 performs transmission control of Msg.3 PUSCH repetition based on a condition under which multiple PRACH transmission or PRACH repetition is applied (for example, a comparison between RSRP and a threshold rsrp-ThresholdPRACHrepetition). Further, in a case where terminal 200 requests Msg.3 PUSCH repetition, terminal 200 selects the number of Repetitions and the MCS index using the MCS field, regardless of whether multiple PRACH transmission or PRACH repetition is applied.

Thus, in an environment where multiple PRACH transmission or PRACH repetition is applied, terminal 200 can be indicated with appropriate values from the number of Repetitions and the MCS index configured by the SIB, and can transmit Msg.3 PUSCH.

Thus, according to the present embodiment, terminal 200 can transmit a signal appropriately in the uplink.

(Embodiment 2)

Embodiment 1 has described a method in which the number of Repetitions and the MCS are determined by the same method (for example, a candidate with the same configuration value, MCS field interpretation in Rel. 17) for terminal 200 that has requested Msg.3 PUSCH repetition, regardless of whether multiple PRACH transmission or PRACH repetition is applied.

For example, an environment where the application of multiple PRACH transmission or PRACH repetition is necessary is assumed to be an environment where the extent to which coverage improvement is necessary is significant, and thus, it is desirable to transmit Msg.3 PUSCH with a larger number of Repetitions or with an MCS that allows for a transmission with a lower coding rate.

Accordingly, in the present embodiment, a case will be described in which a method for determining one set from a plurality of sets (for example, configured sets) of candidates for the configuration values of the number of Repetitions and the MCS of Msg.3 PUSCH repetition is allowed.

For example, in addition to candidates for configuration values of the number of Repetitions and the MCS index that can be indicated by an existing UL grant (hereinafter, also referred to as a "legacy configured set"), additional candidates for configuration values different from the legacy configured set (hereinafter, referred to as an "additional configured set") may be configured in terminal 200. Note that the legacy configured set and the additional configured set may be configured in terminal 200 by, for example, an SIB.

Further, in the present embodiment, terminal 200 may determine which of the legacy configured set and the additional configured set to be used, based on a condition related to the received quality for performing multiple PRACH transmission or PRACH repetition (for example, a comparison between the received quality and a threshold). For example, a threshold (for example, rsrp-ThresholdPRACHrepetitionMoreLevel) for terminal 200 to determine whether to use additional candidates for configuration values (additional configured set) in the determination of the number of Repetitions and the MCS for Msg.3 PUSCH repetition may be configured.

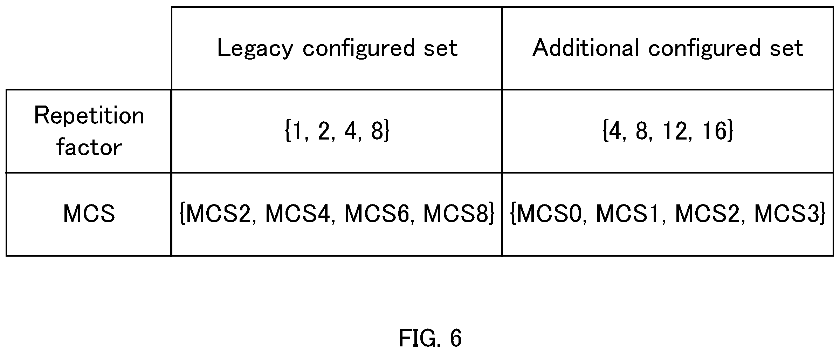

FIG. 6 is a diagram illustrating an example of candidates (legacy configured set) of configuration values of the number of Repetitions and the MCS index that can be indicated by an existing UL grant, and additional candidates (additional configured set) for configuration values of the number of Repetitions and the MCS index.

As illustrated in FIG. 6, the additional configured set may include the great values for the number of Repetitions compared to the number of Repetitions included in the legacy configured set, for example. Further, as illustrated in FIG. 6, the additional configured set may include, for example, MCS indexes lower than the MCS indexes included in the legacy configured set.

Note that, in the present embodiment, additional candidates may be configured for both the number of Repetitions and the MCS index, or additional candidates may be configured for either one of them and no additional candidate may be configured for the other.

For example, terminal 200 measures the received quality (for example, RSRP, RSRQ, or SINR), and in a case where the measured received quality is equal to or less than a threshold for PRACH (for example, rsrp-Threshold-PRACHrepetition), terminal 200 determines that coverage enhancement for PRACH is necessary, and applies multiple PRACH transmission or PRACH repetition to transmit PRACH.

Further, terminal 200 measures the received quality (for example, RSRP, RSRQ, or SINR), and in a case where the measured received quality is equal to or less than a threshold for Msg.3 (for example, rsrp-ThresholdMsg3), terminal 200 determines that coverage enhancement for Msg.3 is necessary and requests Msg.3 PUSCH repetition from base station 100.

Here, the threshold for PRACH (for example, rsrp-ThresholdPRACHrepetition) may be set to a value that does not exceed the threshold for Msg.3 (for example, rsrp-ThresholdMsg3) (for example, rsrp-ThresholdPRACHrepetition < rsrp-ThresholdMsg3). Further, for example, when terminal 200 transmits PRACH by applying multiple PRACH transmission or PRACH repetition in the same manner as in Embodiment 1, terminal 200 may also request Msg.3 PUSCH repetition from base station 100.

Further, in the present embodiment, base station 100 indicates, to terminal 200, the number of Repetitions using two bits of the MSB and the MCS index using two bits of the LSB among the four bits of the MCS field of the RAR UL grant, for example. Note that, the candidates for the configuration values of the number of Repetitions and the MCS index that can be indicated by the UL grant is four, respectively.

At this time, for example, in a case where the received quality is greater than a threshold (for example, rsrp-ThresholdPRACHrepetitionMoreLevel) for determining whether to use additional candidates for the configuration values (additional configured set), terminal 200 determines the number of Repetitions and the MCS index based on the indication of the MCS field by the UL grant and the candidates for the values of the existing number of Repetitions and the MCS index (for example, legacy configured set).

On the other hand, in a case where the received quality is equal to or less than the threshold rsrp-Threshold-PRACHrepetitionMoreLevel, for example, terminal 200 determines the number of Repetitions and the MCS index based on the indication of the MCS field by the UL grant and the additional candidates for the configuration values (for example, additional configured set).

Here, for example, the threshold rsrp-ThresholdPRACHrepetitionMoreLevel may be set to a value that does not exceed a threshold for PRACH (for example, rsrp-ThresholdPRACHrepetition). For example, the relationship may be rsrp-ThresholdPRACHrepetitionMoreLevel < rsrp-ThresholdPRACHrepetition < rsrp-ThresholdMsg3. As described above, terminal 200 may perform transmission control of Msg.3 PUSCH (for example, selection of a candidate set of configuration values for Msg.3 PUSCH repetition) based on a condition related to the repetition transmission of PRACH (for example, comparison between the received quality and a threshold).

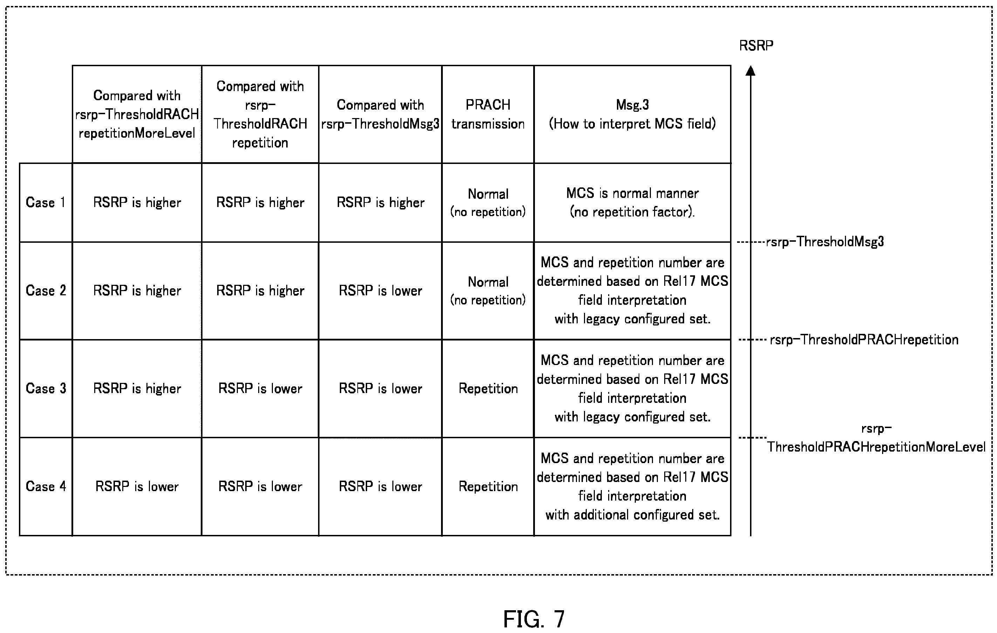

FIG. 7 is a diagram illustrating an example of the interrelationship between the received quality to which multiple PRACH transmission or PRACH repetition is applied, the received quality for which terminal 200 requests Msg.3 PUSCH repetition, and the method for determining the number of Repetitions and the MCS of Msg.3 PUSCH repetition in the present embodiment.

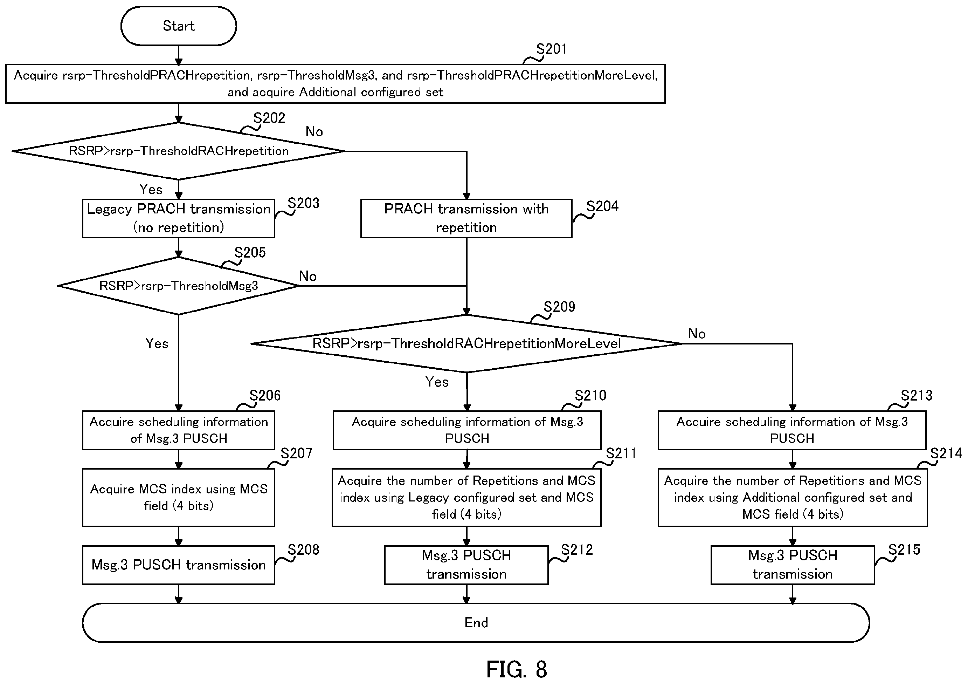

FIG. 8 is a flowchart illustrating an operation example of terminal 200.

In FIG. 8, terminal 200 acquires control information from base station 100 (S201). The control information may include, for example, a threshold for the received quality (rsrp-ThresholdPRACHrepetition) for determining whether to apply PRACH repetition, a threshold for the received quality (rsrp-ThresholdMsg3) for determining whether to apply Msg.3 PUSCH repetition, a threshold for RSRP (for example, "rsrp-ThresholdPRACHrepetitionMoreLevel") for determining whether to use additional candidates for configuration values, and information on the additional candidates for the configuration values (additional configured set).

Terminal 200 measures the received quality (for example, RSRP) and determines whether the measured RSRP is greater than threshold rsrp-ThresholdPRACHrepetition (S202). Further, terminal 200 determines whether the measured RSRP is greater than threshold rsrp-ThresholdMsg3 (S205). Furthermore, terminal 200 determines whether the measured RSRP is greater than threshold rsrp-ThresholdRACHrepetitionMoreLevel (S209).

<Case 1 in FIG. 7>

For example, in a case where the RSRP is greater than the threshold rsrp-ThresholdPRACHrepetition (S202: Yes) and the RSRP is greater than the threshold rsrp-ThresholdMsg3 (S205: Yes), terminal 200 does not apply multiple PRACH transmission or PRACH repetition (for example, applies legacy PRACH transmission) (S203). Further, in this case, terminal 200 does not request Msg.3 PUSCH repetition from base station 100. Further, terminal 200 acquires, for example, the scheduling information of Msg.3 PUSCH (for example, RAR UL grant) (S206), acquires the MCS index using the four bits of the MCS field in the scheduling information (S207), and transmits Msg.3 PUSCH (S208).

<Case 2 in FIG. 7>

For example, in a case where the RSRP is greater than rsrp-ThresholdPRACHrepetition (S202: Yes), the RSRP is equal to or less than the threshold rsrp-ThresholdMsg3 (S205: No), and the RSRP is greater than the threshold rsrp-ThresholdPRACHrepetitionMoreLevel (S209: Yes), terminal 200 does not apply multiple PRACH transmission or PRACH repetition (for example, applies legacy PRACH transmission) (S203). Further, in this case, terminal 200 requests Msg.3 PUSCH repetition from base station 100. Further, terminal 200 acquires, for example, the scheduling information of Msg.3 PUSCH (for example, RAR UL grant) (S210), acquires the number of Repetitions and the MCS index based on the four bits of the MCS field in the scheduling information and the legacy configured set (S211), and transmits Msg.3 PUSCH (S212).

<Case 3 in FIG. 7>

For example, in a case where the RSRP is equal to or less than rsrp-ThresholdPRACHrepetition (S202: No) and the RSRP is greater than threshold rsrp-ThresholdPRACHrepetitionMoreLevel (S209: Yes), terminal 200 applies multiple PRACH transmission or PRACH repetition (S204) and requests Msg.3 PUSCH repetition from base station 100. Further, terminal 200 acquires, for example, the scheduling information of Msg.3 PUSCH (for example, RAR UL grant) (S210), acquires the number of Repetitions and the MCS index based on the four bits of the MCS field in the scheduling information and the legacy configured set (S211), and transmits Msg.3 PUSCH (S212).

<Case 4 in FIG. 7>

For example, in a case where the RSRP is equal to or less than rsrp-ThresholdPRACHrepetition (S202: No) and the RSRP is equal to or less than threshold rsrp-ThresholdPRACHrepetitionMoreLevel (S209: No), terminal 200 applies multiple PRACH transmission or PRACH repetition (S204) and requests Msg.3 PUSCH repetition from base station 100. Further, terminal 200 acquires, for example, the scheduling information of Msg.3 PUSCH (for example, RAR UL grant) (S213), acquires the number of Repetitions and the MCS index based on the four bits of the MCS field in the scheduling information and the additional configured set (S214), and transmits Msg.3 PUSCH (S215).

As described above, according to the present embodiment, terminal 200 performs transmission control of Msg.3 PUSCH repetition based on a condition for applying multiple PRACH transmission or PRACH repetition (for example, a comparison between RSRP and a threshold rsrp-ThresholdPRACHrepetition or rsrp-ThresholdPRACHrepetitionMoreLevel). Further, terminal 200 determines one set from the legacy configured set and the additional configured set for the number of Repetitions and the MCS index of the Msg.3 PUSCH repetition transmission based on a condition for applying multiple PRACH transmission or PRACH repetition.

Thus, in an environment where multiple PRACH transmission or PRACH repetition is applied, terminal 200 can be indicated with appropriate values from the number of Repetitions and the MCS index configured by the SIB, and can transmit Msg.3 PUSCH.

Further, for example, in an environment where the extent to which coverage improvement is necessary is significant and thus the application of multiple PRACH transmission or PRACH repetition is required (for example, when the RSRP is equal to or less than the threshold rsrp-ThresholdPRACHrepetitionMoreLevel), terminal 200 can transmit Msg.3 PUSCH using a larger number of Repetitions or an MCS that allows for a transmission with a lower coding rate.

Thus, according to the present embodiment, terminal 200 can transmit a signal appropriately in the uplink.

Note that, in the present embodiment, the threshold (for example, rsrp-ThresholdPRACHrepetitionMoreLevel) for determining whether to use additional candidates for configuration values may be set to the same value as the threshold for PRACH (for example, rsrp-ThresholdPRACHrepetition). In this case, terminal 200 may determine whether to use additional candidates for configuration values depending on whether to apply multiple PRACH transmission or PRACH repetition. For example, the set of configuration values (configured set) of the number of Repetitions and the MCS index may be different between a case where multiple PRACH transmission or PRACH repetition is applied and a case where multiple PRACH transmission or PRACH repetition is not applied.

Further, even in a case where a threshold for determining whether to use additional candidates for configuration values (for example, rsrp-ThresholdPRACHrepetitionMoreLevel) is not configured in terminal 200, terminal 200 may determine whether to use the additional candidates for configuration values depending on, for example, whether to apply multiple PRACH transmission or PRACH repetition.

Further, in the present embodiment, a case has been exemplarily described in which one of additional candidates for configuration values (additional configured set) is configured for terminal 200, as illustrated in FIG. 6, but a plurality of additional configured sets may be configured for terminal 200. In this case, for example, a plurality of thresholds for determining whether to use additional candidates for configuration values (for example, rsrp-ThresholdPRACHrepetitionMoreLevel) may be configured.

(Embodiment 3)

In the present embodiment, a case where a method for determining one set from a plurality of sets (for example, configured sets) of candidates for the configuration values of the number of Repetitions and the MCS of Msg.3 PUSCH repetition is allowed will be described in the same manner as in Embodiment 2.

For example, in addition to candidates for configuration values of the number of Repetitions and the MCS index that can be indicated by an existing UL grant (for example, a legacy configured set), additional candidates for additional configuration values (for example, an additional configured set) different from the legacy configured set may be configured for terminal 200. The legacy configured set and the additional configured set may be configured for terminal 200 by, for example, an SIB.

Further, in the present embodiment, terminal 200 may determine which of the legacy configured set and the additional configured set to be used based on a condition related to a level of multiple PRACH transmission or PRACH repetition (for example, a comparison between a level and a threshold) (for example, also referred to as a PRACH repetition level, a PRACH coverage level, or a PRACH coverage enhancement level). For example, a parameter (for example, "level-prach-For-msg3repetition") indicating a level for determining whether to use additional candidates for configuration values in the determination of the number of Repetitions and the MCS of Msg.3 PUSCH repetition may be configured.

For example, examples of the existing candidates for configuration values (legacy configured set) of the number of Repetitions and the MCS index and the additional candidates for configuration values of the number of Repetitions and the MCS index in the present embodiment may be the same as in Embodiment 2 (for example, FIG. 6). The additional candidates for configuration values may include, for example, the number of Repetitions that is larger than the number of Repetitions included in the existing candidates for configuration values. Further, the additional candidates for configuration values may include, for example, an MCS index that is lower than the MCS index included in the existing candidate for configuration values. Note that, in the present embodiment, additional candidates may be configured for both the number of Repetitions and the MCS index, or additional candidates may be configured for either one of them and no additional candidate may be configured for the other.

For example, terminal 200 measures the received quality (for example, RSRP, RSRQ, or SINR), and in a case where the measured received quality is equal to or less than a threshold for PRACH (for example, rsrp-ThresholdPRACHrepetition), terminal 200 determines that coverage enhancement for PRACH is necessary, and applies multiple PRACH transmission or PRACH repetition to transmit PRACH.

Here, in the present embodiment, a plurality of thresholds for PRACH may be configured. For example, a plurality of PRACH repetition levels or PRACH coverage enhancement levels with different numbers of PRACH Repetitions may be configured. For example, "rsrp-ThresholdPRACHrepetition1" and "rsrp-ThresholdPRACHrepetition2" (for example, rsrp-ThresholdPRACHrepetition1 > rsrp-ThresholdPRACHrepetition2) may be configured.

For example, in a case where the received quality is greater than rsrp-ThresholdPRACHrepetition1, PRACH coverage level 0 (level to which PRACH repetition is not applied) may be configured, in a case where the received quality is equal to or less than rsrp-ThresholdPRACHrepetition1 and greater than rsrp-ThresholdPRACHrepetition2, PRACH coverage level 1 (level to which PRACH repetition is applied) may be configured, and in a case where the received quality is equal to or less than rsrp-ThresholdPRACHrepetition2, PRACH coverage level 2 (for example, level to which PRACH repetition is applied and a level in which the number of Repetitions is larger than that that for PRACH coverage level 1) may be configured.

Further, terminal 200 measures the received quality (for example, RSRP, RSRQ, or SINR), and when the measured received quality is equal to or less than a threshold for Msg.3 (for example, rsrp-ThresholdMsg3), terminal 200 determines that coverage enhancement for Msg.3 is necessary and requests Msg.3 PUSCH repetition from base station 100.

Here, the threshold for PRACH (for example, rsrp-ThresholdPRACHrepetition) may be set to a value that does not exceed the threshold for Msg.3 (for example, rsrp-ThresholdMsg3) (for example, rsrp-ThresholdMsg3 > rsrp-ThresholdPRACHrepetition1, rsrp-ThresholdPRACHrepetition2). Further, for example, when terminal 200 transmits PRACH by applying multiple PRACH transmission or PRACH repetition in the same manner as in Embodiment 1, terminal 200 may also request Msg.3 PUSCH repetition from base station 100.

Further, in the present embodiment, base station 100 indicates, to terminal 200, the number of Repetitions using two bits of the MSB and the MCS index using two bits of the LSB among four bits of the MCS field of the RAR UL grant, for example. In this case, the candidates for the configuration values of the number of Repetitions and the MCS index that can be indicated by the UL grant are four each.

At this time, for example, in a case where the PRACH coverage level is lower than a threshold (for example, level-prach-For-msg3repetition) for determining whether to use additional candidates for configuration values (additional configured set), terminal 200 determines the number of Repetitions and the MCS index based on the indication of the MCS field of the UL grant and the existing candidates (for example, legacy configured set) for the values of the number of Repetitions and the MCS index.

On the other hand, in a case where the PRACH coverage level is equal to or greater than threshold level-prach-For-msg3repetition, for example, terminal 200 determines the number of Repetitions and the MCS index based on the indication of the MCS field of the UL grant and additional candidates for configuration values (for example, additional configured set).

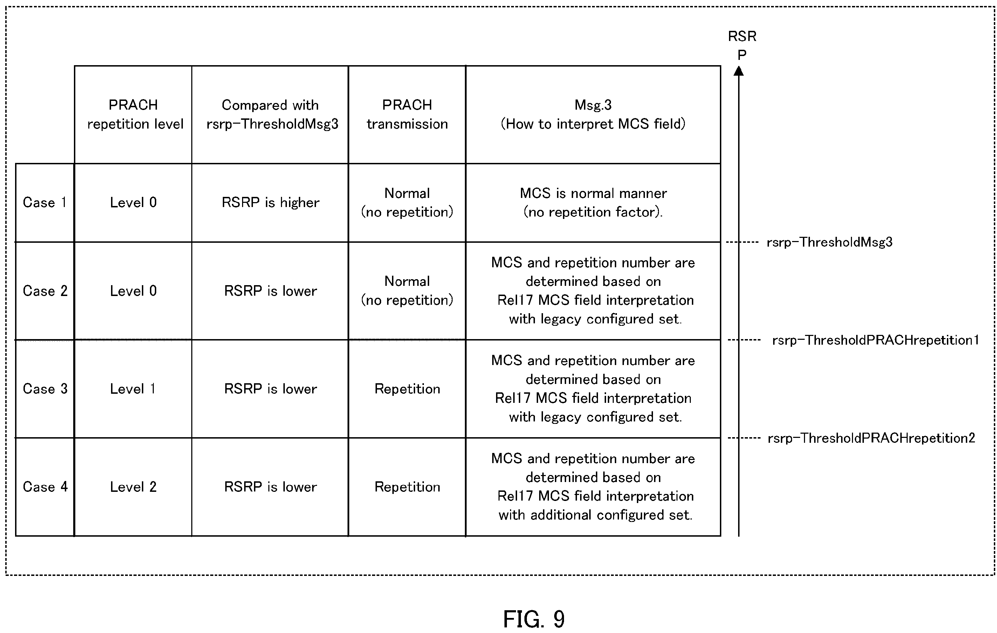

FIG. 9 is a diagram illustrating an example of the interrelationship between the received quality to which multiple PRACH transmission or PRACH repetition is applied, the PRACH coverage level, the received quality for which terminal 200 requests Msg.3 PUSCH repetition, and the method for determining the number of Repetitions and the MCS of Msg.3 PUSCH repetition in the present embodiment.

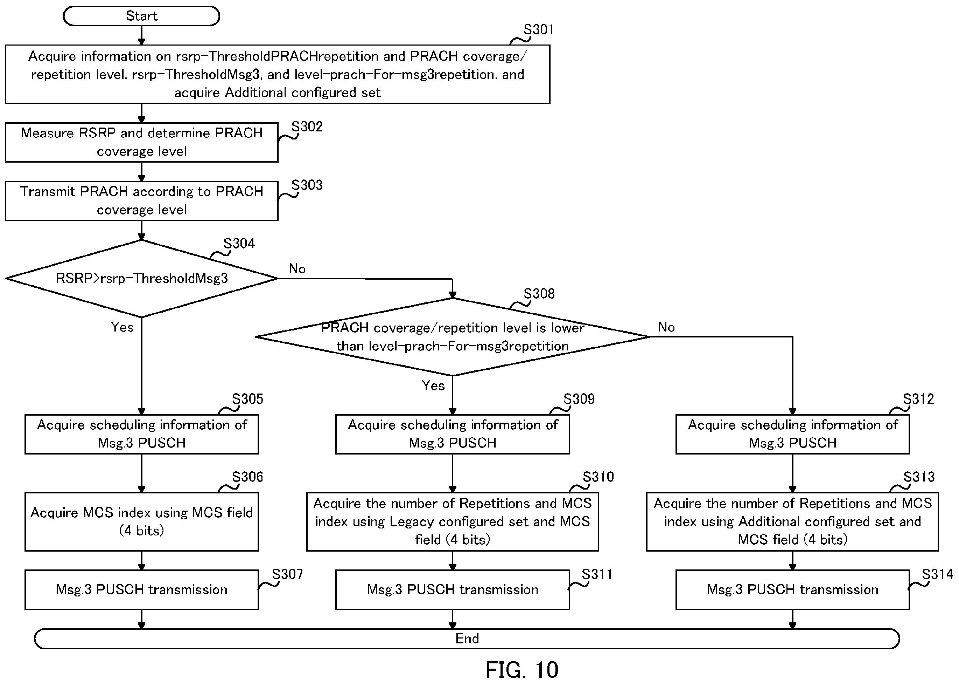

FIG. 10 is a flowchart illustrating an operation example of terminal 200.

In FIG. 10, terminal 200 acquires control information from base station 100 (S301). The control information may include, for example, a threshold for the received quality (rsrp-ThresholdPRACHrepetition1, rsrp-ThresholdPRACHrepetition2) for determining whether to apply PRACH repetition, and information on a PRACH coverage level or a PRACH repetition level. Further, the control information may include, for example, a threshold (rsrp-ThresholdMsg3) for the received quality for determining whether to apply Msg.3 PUSCH repetition, a threshold (for example, level-prach-For-msg3repetition) for determining whether to use additional candidates for configuration values, and information on the additional candidates for configuration values (additional configured set).

Terminal 200 measures the received quality (for example, RSRP), compares the measured RSRP with a threshold for PRACH (rsrp-ThresholdPRACHrepetition1, rsrp-ThresholdPRACHrepetition2), and determines the PRACH coverage level (S302). For example, terminal 200 may configure PRACH coverage level 0 (Level 0) when the RSRP is greater than rsrp-ThresholdPRACHrepetition1 (cases 1 and 2 in FIG. 9). Further, for example, terminal 200 may configure PRACH coverage level 1 (Level 1) when the RSRP is equal to or less than rsrp-ThresholdPRACHrepetition1 and greater than rsrp-ThresholdPRACHrepetition2 (case 3 in FIG. 9). Further, for example, terminal 200 may configure PRACH coverage level 2 (Level 2) when the RSRP is equal to or less than rsrp-ThresholdPRACHrepetition2 (case 4 in FIG. 9).

For example, terminal 200 determines the transmission of PRACH (for example, multiple PRACH transmission or PRACH repetition) depending on the determined PRACH coverage level (S303). For example, in the example of FIG. 9, terminal 200 determines to apply multiple PRACH transmission or PRACH repetition when the PRACH coverage level is Level 1 or higher (case 3 and case 4), and determines not to apply multiple PRACH transmission or PRACH repetition when the PRACH coverage level is Level 0 (case 1 and case 2).

Terminal 200 determines whether the measured RSRP is greater than threshold rsrp-ThresholdMsg3 (S304). Further, terminal 200 determines whether the determined PRACH coverage level is lower than threshold level-prach-For-msg3repetition (S308). Note that, in the example of FIG. 9, level-prach-For-msg3repetition is set to Level 2.

<Case 1 in FIG. 9>

For example, in a case where RSRP is greater than threshold rsrp-ThresholdMsg3 (S304: Yes), terminal 200 acquires the scheduling information of Msg.3 PUSCH (for example, RAR UL grant) (S305), acquires the MCS index using the four bits of the MCS field in the scheduling information (S306), and transmits Msg.3 PUSCH (S307).

<Case 2 and Case 3 in FIG. 9>

For example, in a case where the RSRP is equal to or less than threshold rsrp-ThresholdMsg3 (S304: No) and the PRACH coverage level is lower than threshold level-prach-For-msg3repetition (Level 2 in FIG. 9) (S308: Yes), terminal 200 acquires the scheduling information (for example, RAR UL grant) of Msg.3 PUSCH (S309), acquires the number of Repetitions and the MCS index based on the four bits of the MCS field in the scheduling information and the legacy configured set (S310), and transmits Msg.3 PUSCH (S311).

<Case 4 in FIG. 9>

For example, in a case where the RSRP is equal to or less than the threshold rsrp-ThresholdMsg3 (S304: No) and the PRACH coverage level is equal to or greater than the threshold level-prach-For-msg3repetition (Level 2 in FIG. 9) (S308: No), terminal 200 acquires the scheduling information (for example, RAR UL grant) of Msg.3 PUSCH (S312), acquires the number of Repetitions and the MCS index based on the four bits of the MCS field in the scheduling information and the additional configured set (S313), and transmits Msg.3 PUSCH (S314).

As described above, according to the present embodiment, terminal 200 performs transmission control of Msg.3 PUSCH repetition based on a condition related to multiple PRACH transmission or PRACH repetition (for example, a comparison between a PRACH coverage level and a threshold level-prach-For-msg3repetition). Further, terminal 200 determines one set from the legacy configured set and the additional configured set for the number of Repetitions and the MCS index of the Msg.3 PUSCH repetition transmission based on a condition related to multiple PRACH transmission or PRACH repetition.

Thus, in an environment where multiple PRACH transmission or PRACH repetition is applied, terminal 200 can be indicated with appropriate values from the number of Repetitions and the MCS index configured by the SIB, and can transmit Msg.3 PUSCH.

Further, for example, in an environment where the extent to which coverage improvement is necessary is significant and thus the application of multiple PRACH transmission or PRACH repetition is required (for example, when the RSRP is equal to or less than the threshold rsrp-ThresholdPRACHrepetitionMoreLevel), terminal 200 can transmit Msg.3 PUSCH using a larger number of Repetitions or an MCS that allows for a transmission with a lower coding rate.

Thus, according to the present embodiment, terminal 200 can transmit a signal appropriately in the uplink.

Note that, in the present embodiment, the PRACH coverage level may be predefined. The coverage level for determining whether to use additional candidates for configuration values in the determination of the number of Repetitions and the MCS for Msg.3 PUSCH repetition may be configured for terminal 200 by an SIB or may be a coverage level defined in the standard.

Further, in the example of FIG. 9, a case has been described where two thresholds (rsrp-ThresholdPRACHrepetition) for the received quality for configuring the PRACH coverage level are configured, but one, three, or more thresholds may be configured. Further, in the example of FIG. 9, a case has been described where three types (Level 0 to 2) of PRACH coverage levels are configured, but two types of PRACH coverage levels may be configured, or four or more types of PRACH coverage levels may be configured.

Further, for example, in the present embodiment, a case where one set of additional candidates for configuration values (additional configured set) is configured has been described as an example, but a plurality of additional configured sets may be configured for terminal 200. In this case, for example, a plurality of thresholds level-prach-For-msg3repetition may be configured.

(Embodiment 4)

In the present embodiment, a case where a method for determining one set from a plurality of sets (for example, configured sets) of candidates for the configuration values of the number of Repetitions and the MCS of Msg.3 PUSCH repetition is allowed will be described in the same manner as in Embodiments 2 and 3.

For example, in addition to candidates (for example, a legacy configured set) for configuration values of the number of Repetitions and the MCS index that can be indicated by an existing UL grant, a scaling factor for calculating additional candidates for configuration values different from the legacy configured set may be configured for terminal 200.

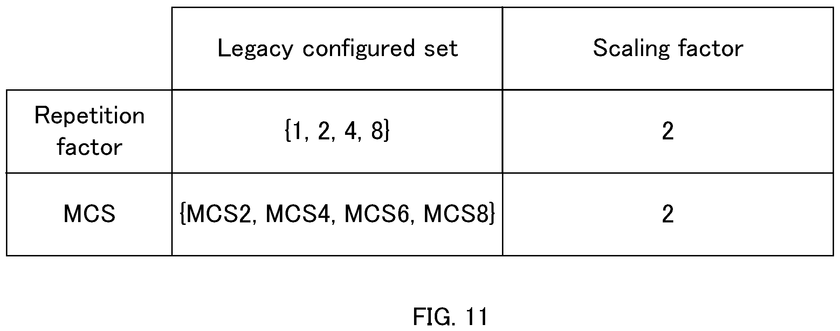

FIG. 11 is a diagram illustrating exemplary existing candidates for configuration values (legacy configured set) of the number of Repetitions and the MCS index that can be indicated by a UL grant, and scaling factors for calculating additional candidates for configuration values in the present embodiment.

Note that the scaling factor may be configured for both the number of Repetitions and the MCS index, or may be configured for one of them and need not be configured for the other. Further, a scaling factor (for example, $\alpha_{Repetition}$ and $\alpha_{MCS}$) may be configured individually for each of the number of Repetitions and the MCS index, or a common scaling factor (for example, $\alpha$) may be configured for the number of Repetitions and the MCS index. Further, the scaling factor may be configured for terminal 200 by an SIB, for example, or may be a value defined in the standard (for example, 2, 4, or the like).

Further, in the present embodiment, terminal 200 may determine whether to apply Repetition to PRACH, whether to request Msg.3 PUSCH repetition, and whether to use additional candidates for configuration values (or whether to apply a scaling factor) in the determination of the number of Repetitions and the MCS of Msg.3 PUSCH, based on, for example, the method according to Embodiment 2 or 3,

Hereinafter, for a case based on the methods according to Embodiments 2 and 3, an exemplary operation different from the operations in Embodiments 2 and 3 will be described.

In a case where the method is based on Embodiment 2, in the process of S201 illustrated in FIG. 8, terminal 200 may acquire information on a scaling factor instead of information on additional candidates for configuration values (Additional configured set). Further, in the process of S214 illustrated in FIG. 8, terminal 200 may acquire the number of Repetitions and the MCS index based on the existing candidates for configuration values (legacy configured set) of the number of Repetitions and the MCS index, the scaling factor, and the value of the MCS field (for example, 4 bits) by using the scaling factor instead of information on additional candidates for configuration values (Additional configured set).

Further, in a case where the method is based on Embodiment 3, in the process of S301 illustrated in FIG. 10, terminal 200 may acquire information on a scaling factor instead of information on additional candidates for configuration values (Additional configured set). Further, in the process of S313 illustrated in FIG. 10, terminal 200 may acquire the number of Repetitions and the MCS index based on the existing candidates for configuration values (legacy configured set) of the number of Repetitions and the MCS index, the scaling factor, and the value of the MCS field (for example, 4 bits) by using the scaling factor instead of information on additional candidates for configuration values (Additional configured set).

To terminal 200, for example, the number of Repetitions is indicated using two bits of the MSB of the four bits of the MCS field of the RAR UL grant, and the MCS index is indicated using two bits of the LSB of the four bits of the MCS field. In this case, the numbers of candidates for values of the number of Repetitions and the MCS index that can be indicated by the UL grant are four each.

For example, in a case where terminal 200 determines to use the existing candidates for configuration values (legacy configured set) of the number of Repetitions and the MCS index for the determination of the number of Repetitions and the MCS, terminal 200 determines the number of Repetitions and the MCS index based on the indication of the MCS field by the UL grant and the existing candidates for the configuration values of the number of Repetitions and the MCS index.

On the other hand, for example, in a case where terminal 200 determines to use additional candidates for configuration values for the determination of the number of Repetitions and the MCS, terminal 200 determines the number of Repetitions and the MCS index based on the indication of the MCS field by the UL grant, the existing candidates for the configuration values (legacy configured set) of the number of Repetitions and the MCS index, and the scaling factor.

For example, for the number of Repetitions, a value obtained by multiplying a scaling factor by the existing candidate for the number of Repetitions may be configured as an additional candidate for the number of Repetitions. For example, in a case where the existing candidates for the number of Repetitions are $\{N_1, N_2, N_3, N_4\}$ and the scaling factor is $\alpha$, the additional candidates for the number of Repetitions may be set to $\{\alpha \times N_1, \alpha \times N_2, \alpha \times N_3, \alpha \times N_4\}$.

Further, for the MCS index, for example, a value obtained by subtracting a scaling factor from the existing candidate for the MCS index may be configured as an additional candidate for the MCS index. For example, in a case where the candidates for the MCS index are $\{MCS_1, MCS_2, MCS_3, MCS_4\}$ and the scaling factor is $\alpha$, the additional candidates for the MCS index may be set to $\{MCS_1 - \alpha, MCS_2 - \alpha, MCS_3 - \alpha, MCS_4 - \alpha\}$.

As described above, according to the present embodiment, terminal 200 performs transmission control of Msg.3 PUSCH repetition based on a condition related to multiple PRACH transmission or PRACH repetition (for example, a condition related to received quality or PRACH coverage level). Further, terminal 200 determines the number of Repetitions and the MCS index for Msg.3 PUSCH repetition transmission based on a legacy configured set and a scaling factor.

Thus, in an environment where multiple PRACH transmission or PRACH repetition is applied, terminal 200 can be indicated with appropriate values from the number of Repetitions and the MCS index configured by the SIB, and can transmit Msg.3 PUSCH.

Further, for example, in an environment where the extent to which coverage improvement is necessary is significant and thus the application of multiple PRACH transmission or PRACH repetition is required (for example, when the RSRP is equal to or less than the threshold rsrp-ThresholdPRACHrepetitionMoreLevel), terminal 200 can transmit Msg.3 PUSCH using a larger number of Repetitions or an MCS that allows for a transmission with a lower coding rate.

Further, in the present embodiment, applying a scaling factor eliminates the need of indicating additional candidates for configuration values (additional configured set) of the number of Repetitions and the MCS index, and thus the overhead of the SIB can be reduced, compared with Embodiment 2 or Embodiment 3.

(Variations of Embodiment 4)

Note that, in Embodiment 4, for the candidate for the MCS index, a value obtained by dividing the existing candidate for the MCS index by a scaling factor may be configured as an additional candidate for the MCS index. For example, in a case where the existing candidates for the MCS index are $\{MCS_1, MCS_2, MCS_3, MCS_4\}$ and the scaling factor is $\alpha$, the additional candidates for the MCS index may be configured as follows.

[1]
$$\{\lfloor MCS_1/\alpha \rfloor, \ \lfloor MCS_2/\alpha \rfloor, \ \lfloor MCS_3/\alpha \rfloor, \ \lfloor MCS_4/\alpha \rfloor\} \quad \text{or}$$

$$\{\lfloor MCS_1/\alpha \rfloor, \ \lfloor MCS_2/\alpha \rfloor, \ \lfloor MCS_3/\alpha \rfloor, \ \lfloor MCS_3/\alpha \rfloor\}.$$

This makes it possible to prevent the MCS index after scaling from being a negative value.

Further, for the candidate for the MCS index, instead of applying a scaling factor to the existing candidate for the MCS index, the scaling factor may be applied to a Target code rate (R) corresponding to the existing MCS index (see, for example, NPL 7). For example, in a case where scaling factor $\alpha > 1$, a Target code rate after scaling may be calculated by dividing a Target code rate (R) corresponding to the existing MCS index by $\alpha$. Further, in a case where scaling factor $\alpha < 1$, the Target code rate after scaling may be calculated by multiplying the Target code rate (R) corresponding to the existing MCS index by $\alpha$.

Furthermore, in Embodiment 4, in a case where the MCS index after scaling (for example, {$MCS_1 - \alpha$, $MCS_2 - \alpha$, $MCS_3 - \alpha$, $MCS_4 - \alpha$}) becomes a negative value, the scaling factor may be applied to the Target code rate (R) corresponding to the existing MCS index described above.

According to the variation of Embodiment 4, it is possible to realize a coding rate lower than the coding rate for the existing MCS index.

Further, in Embodiment 4, the MCS indexes after scaling {$MCS_1 - \alpha$, $MCS_2 - \alpha$, $MCS_3 - \alpha$, $MCS_4 - \alpha$} may be configured to be always 0 or more.

Further, regarding the candidates for the number of Repetitions, in a case where the candidates for the number of Repetitions are {$N_1$, $N_2$, $N_3$, $N_4$} and the scaling factor is $\alpha$, for example, the additional candidates for the number of Repetitions may be set to values {$N_1 + \alpha$, $N_2 + \alpha$, $N_3 + \alpha$, $N_4 + \alpha$} obtained by adding the scaling factor to the existing candidates for the number of Repetitions.

The embodiments have been described thus far.

[Configuration of Base Station]

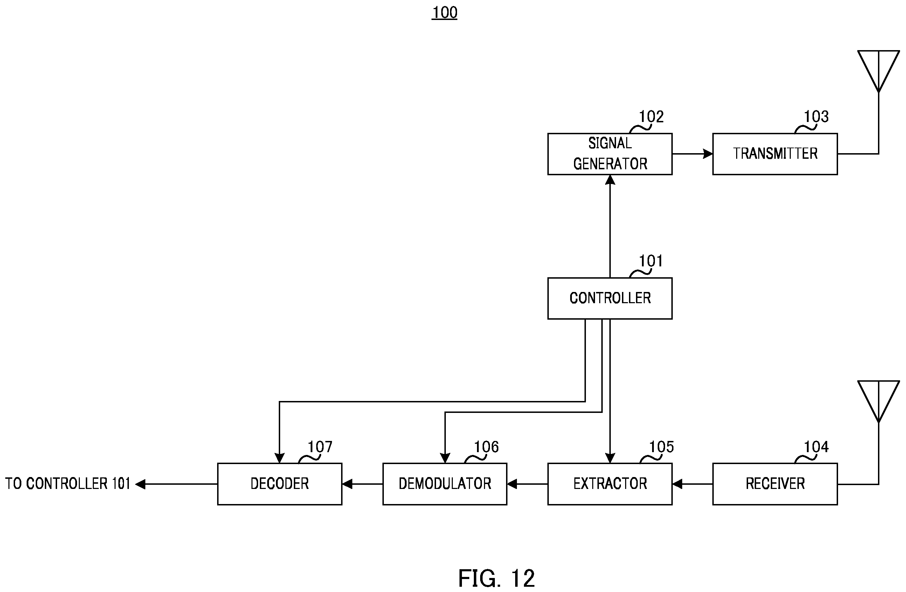

FIG. 12 is a block diagram illustrating a configuration example of base station 100 according to an embodiment of the present disclosure. In FIG. 12, base station 100 includes controller 101, signal generator 102, transmitter 103, receiver 104, extractor 105, demodulator 106, and decoder 107.

Note that, at least one of controller 101, signal generator 102, extractor 105, demodulator 106, and decoder 107 illustrated in FIG. 12 may be included in the controller illustrated in FIG. 2. Further, receiver 104 illustrated in FIG. 12 may be included in the receiver illustrated in FIG. 2.

Controller 101 determines information on PRACH transmission, for example, and outputs the determined information to signal generator 102. The information on PRACH transmission may include, for example, information on RACH resources and information on the threshold for PRACH described above.

Further, controller 101 determines information on Msg.3 PUSCH transmission, for example, and outputs the determined information to signal generator 102. The information on Msg.3 PUSCH transmission may include, for example, information (for example, a threshold, a coverage level, a scaling factor) on the interrelationship between a condition (for example, received quality) under which terminal 200 applies multiple PRACH transmission or PRACH repetition and a condition (for example, received quality) under which the terminal requests Msg.3 PUSCH repetition (or a condition for switching a method for determining the number of Repetitions or the MCS of Msg.3 PUSCH repetition). Controller 101 may perform reception control of Msg.3 PUSCH repetition (for example, configuration of transmission parameters such as the number of Repetitions and the MCS index) based on a condition for applying multiple PRACH transmission or PRACH repetition, for example.

Further, controller 101 may determine information on a radio resource for a downlink signal, for example.

Controller 101 outputs information on PRACH transmission, information on Msg.3 PUSCH transmission, and information on a radio resource for a downlink signal to signal generator 102, extractor 105, demodulator 106, and decoder 107.

Note that, controller 101 may perform control related to the uplink based on, for example, a detection result of PRACH or a reception bit sequence after decoding of Msg.3 PUSCH, which are inputted from decoder 107.

Signal generator 102, for example, generates a downlink signal such as a downlink data signal or a downlink control signal. For example, signal generator 102 generates a Synchronization Signal (SS)/Physical Broadcast Channel (PBCH) Block (SS/PBCH block) and an SIB bit sequence using the information inputted from controller 101. Signal generator 102 may apply encoding to the generated signal as necessary. The SIB bit sequence may include, for example, information on a RACH resource, information on a threshold for PRACH, and information on an interrelationship between a condition for terminal 200 to apply multiple PRACH transmission or PRACH repetition and a condition for terminal 200 to requesting Msg.3 PUSCH repetition (or a condition for switching a method for determining the number of Repetitions or the MCS of Msg.3 PUSCH repetition) inputted from controller 101.

Signal generator 102, for example, modulates an encoded bit sequence of a signal including the information described above, generates a symbol sequence, and maps the symbol sequence to a radio resource based on the information inputted from controller 101. Further, signal generator 102 outputs the signal after mapping to transmitter 103.

Transmitter 103 performs, for example, transmission waveform generation processing such as orthogonal frequency division multiplexing (OFDM) on the signal inputted from signal generator 102. Further, in a case of OFDM transmission to which a cyclic prefix (CP) is added, transmitter 103, for example, performs inverse Fast Fourier Transform (IFFT) processing on the signal and adds a CP to the signal after the IFFT. Further, for example, transmitter 103 performs RF processing such as D/A conversion or up-conversion on the signal, and transmits a radio signal to terminal 200 via an antenna.

Receiver 104 performs RF processing such as down-conversion or A/D conversion on an uplink signal received from terminal 200 via an antenna, for example. Further, in the case of OFDM transmission, receiver 104 performs, for example, Fast Fourier Transform (FFT) processing on the received signal and outputs the obtained frequency domain signal to extractor 105.

Extractor 105 extracts, for example, a radio resource portion in which PRACH or Msg.3 PUSCH is transmitted, from the received signal inputted from receiver 104 based on the information inputted from controller 101, and outputs the extracted radio resource portion to demodulator 106.

Demodulator 106 demodulates the signal inputted from extractor 105 based on information inputted from controller 101, for example. Demodulator 106 outputs, for example, the demodulation result to decoder 107.

Decoder 107 performs, for example, detection of PRACH or error correction decoding of Msg.3 PUSCH based on the information inputted from controller 101 and the demodulation result inputted from demodulator 106, and obtains the PRACH detection result or the reception bit sequence after decoding of Msg.3 PUSCH. Decoder 107 may output the PRACH detection result or the reception bit sequence after decoding of Msg.3 PUSCH to controller 101.

[Configuration of Terminal]

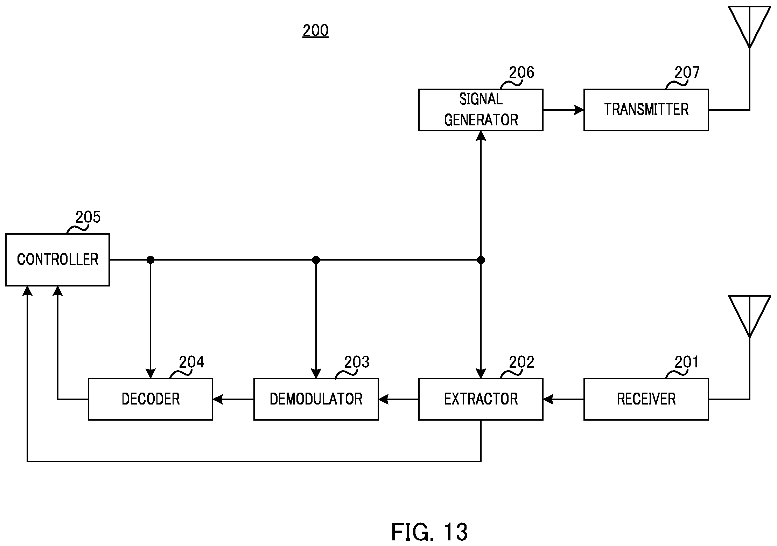

FIG. 13 is a block diagram illustrating a configuration example of terminal 200 according to an embodiment of the present disclosure. For example, in FIG. 13, terminal 200 includes receiver 201, extractor 202, demodulator 203, decoder 204, controller 205, signal generator 206, and transmitter 207.

Note that, at least one of extractor 202, demodulator 203, decoder 204, controller 205, and signal generator 206 illustrated in FIG. 13 may be included in the controller illustrated in FIG. 3. Further, transmitter 207 illustrated in FIG. 13 may be included in the transmitter illustrated in FIG. 3.

Receiver 201 receives, for example, a downlink signal (for example, a data signal or a downlink control signal) from base station 100 via an antenna, performs RF processing such as down-conversion or A/D conversion on the radio received signal, and obtains a received signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, a radio resource portion that may include an SS/PBCH block and an SIB from the received signal inputted from receiver 201 based on information on a radio resource of a downlink signal inputted from controller 205, and outputs the radio resource portion to demodulator 203 and controller 205.

Demodulator 203, for example, demodulates the signal inputted from extractor 202 based on the information inputted from controller 205, and outputs the demodulation result to decoder 204.

Decoder 204 obtains information included in PBCH or SIB using the demodulation result inputted from demodulator 203 based on the information inputted from controller 205, for example. Decoder 204 outputs the obtained control information to controller 205.

Controller 205 measures the received quality (for example, RSRP) using the received signal inputted from extractor 202. Further, for example, controller 205 may determine a PRACH transmission method (for example, whether to apply Repetition) by using the measured received quality (for example, RSRP) and the control information inputted from decoder 204, by the method described above. Further, controller 205 may determine the method for transmitting Msg.3 PUSCH (for example, whether to apply Repetition, or the method for determining the number of Repetitions and the MCS) by using the measured received quality (for example, RSRP) by the method described above. Controller 205 outputs the determined information to signal generator 206.

Further, for example, controller 205 determines information on a downlink signal (for example, a radio resource or MCS) using the control information inputted from decoder 204, and outputs the determined information to extractor 202, demodulator 203, and decoder 204.

Signal generator 206 generates a PRACH signal or Msg.3 PUSCH based on the information inputted from controller 205. Signal generator 206 maps the generated PRACH signal or Msg.3 PUSCH to the radio resource indicated by controller 205, and outputs the mapped signal to transmitter 207.

Transmitter 207, for example, performs generation of a transmission signal waveform such as OFDM on the signal inputted from signal generator 206. Further, for example, in a case of OFDM transmission using a CP, transmitter 207 performs IFFT processing on the signal and adds a CP to the signal after the IFFT. Alternatively, in a case where transmitter 207 generates a single carrier waveform, a Discrete Fourier Transform (DFT) processor may be added to a stage after a modulation processor (not illustrated) or to a stage before a signal assigner (not illustrated) (not illustrated), for example. Further, for example, transmitter 207 performs RF processing such as D/A conversion and up-conversion on the transmission signal, and transmits a radio signal to base station 100 via an antenna.

The embodiments according to a non-limiting example of the present disclosure have been each described, thus far.

(Variation)

The threshold for PRACH in the above-described embodiment may be configured as a relative value (or difference) with respect to the existing threshold for Msg.3 (for example, rsrp-ThresholdMsg3). Using a relative value can reduce the overhead related to the indication of the threshold for PRACH.

Further, the threshold (for example, rsrp-ThresholdPRACHrepetitionMoreLevel) for determining whether to use additional candidates for configuration values in Embodiment 2 may also be configured as a relative value with respect to the existing threshold for Msg.3 (for example, rsrp-ThresholdMsg3).

For example, in a case where terminal 200 measures the received quality (RSRP, RSRQ, or SINR), and the difference (relative value) between the received quality and the threshold for Msg.3 (for example, rsrp-ThresholdMsg3) is less than the threshold (for example, Y described later), terminal 200 determines the number of Repetitions and the MCS index based on the indication of the MCS field by the UL grant and the existing candidates for the configuration values of the number of Repetitions and the MCS index. On the other hand, in a case where the difference (relative value) between the received quality and the threshold for Msg.3 is equal to or greater than the threshold, terminal 200 determines the number of Repetitions and the MCS index based on the indication of the MCS field by the UL grant and the additional candidates for the configuration values described above.

Here, the threshold for the relative value (for example, Y described later) for determining whether to use additional candidates for configuration values for the determination of the number of Repetitions and the MCS of the Msg.3 PUSCH repetition is configured to be greater than the threshold for the relative value (for example, X described later) for PRACH.

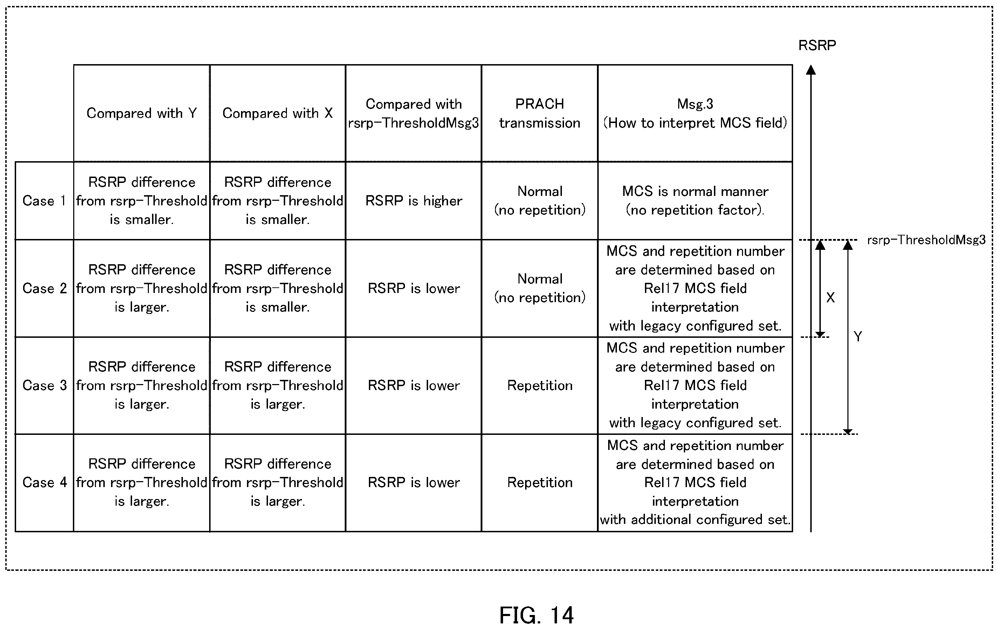

FIG. 14 is a diagram, according to a variation, illustrating an example of the interrelationship between a relative value of the received quality to which multiple PRACH transmission or PRACH repetition is applied with respect to the received quality (for example, threshold resp-ThresholdMsg3) for which Msg.3 PUSCH repetition is requested, the received quality for which terminal 200 requests Msg.3 PUSCH repetition, and a method for determining the number of Repetitions and the MCS of Msg.3 PUSCH repetition.

As illustrated in FIG. 14, in a case where the difference (relative value) between the received quality and the threshold rsrp-ThresholdMsg3 for Msg.3 is less than threshold X (case 2), multiple PRACH transmission or PRACH repetition is not applied, Msg.3 PUSCH repetition is requested, and the number of Repetitions and the MCS of Msg.3 PUSCH repetition are determined based on the existing candidates for configuration values (legacy configured set).

Further, as illustrated in FIG. 14, in a case where the difference (relative value) between the received quality and the threshold rsrp-ThresholdMsg3 for Msg.3 is equal to or greater than threshold X and is less than threshold Y(case 3), multiple PRACH transmission or PRACH repetition is applied, Msg.3 PUSCH repetition is requested, and the number of Repetitions and the MCS of Msg.3 PUSCH repetition are determined based on the existing candidates for configuration values (legacy configured set).

Further, as illustrated in FIG. 14, in a case where the difference (relative value) between the received quality and the threshold rsrp-ThresholdMsg3 for Msg.3 is equal to or greater than threshold Y (case 4), multiple PRACH transmission or PRACH repetition is applied, Msg.3 PUSCH repetition is requested, and the number of Repetitions and the MCS of Msg.3 PUSCH repetition are determined based on additional candidates for configuration values (additional configured set).

(Other Embodiments)

(1) In each of the embodiments described above, the operation related to the initial transmission of Msg.3 PUSCH has been focused on. In other words, the operation examples of each embodiment described above are operation examples related to the determination of the number of Repetitions and the MCS of Msg.3 PUSCH scheduled by the RAR UL grant. On the other hand, each of the embodiments described above can also be applied to the retransmission of Msg.3 PUSCH. For example, each of the embodiments described above can be applied to the determination of the number of Repetitions and the MCS of Msg.3 PUSCH scheduled by DCI format 0-0 scrambled by TC-RNTI.

The MCS field of DCI format 0-0 scrambled by TC-RNTI is composed of five bits. In the existing method for determining the number of Repetitions and the MCS index, the number of Repetitions is indicated using two bits of the MSB of the 5-bit MCS field in DCI format 0-0 scrambled by TC-RNTI, and the MCS index is indicated using three bits of the LSB of the 5-bit MCS field. At this time, the numbers of candidates for configuration values of the number of Repetitions and the MCS index that can be indicated by DCI (for example, two bits) are four each, and these may be configured in terminal 200 by an SIB.

At this time, the number of Repetitions and the MCS index of the Msg.3 PUSCH scheduled by DCI format 0-0 scrambled by TC-RNTI may be determined based on the additional candidates for configuration values or the scaling factor described above. As a condition under which the method for determining the number of Repetitions and the MCS by the additional candidates for configuration values or the scaling factor is used, the method in each embodiment described above may be applied.

Further, the additional candidates for configuration values or the scaling factor may be the same or different between the case of the first retransmission (for example, Msg.3 PUSCH scheduled by RAR UL grant) and the case of the retransmission (for example, Msg.3 PUSCH scheduled by DCI format 0-0 scrambled by TC-RNTI).

(2) In each of the embodiments described above, a method for indicating the number of Repetitions and the MCS index by reusing the MCS field of DCI format 0-0 scrambled by the UL grant of RAR or TC-RNTI has been focused on. However, for example, the method for indicating the number of Repetitions is not limited to a method in which the MCS field is reused.

For example, the number of Repetitions may be indicated by a Time Domain Resource Assignment (TDRA) table for Msg.3 PUSCH repetition which includes the number of Repetitions in addition to K2 offset and SLIV.

Further, another field may be reused instead of the MCS field. For example, the number of Repetitions may be indicated by reusing the Transmit Power Control (TPC) field.

Further, in DCI format 0-0 scrambled by TC-RNTI, the HARQ process number field may be reused to indicate the number of Repetitions.

Even in these methods for indicating the number of Repetitions, the number of Repetitions may be determined by the additional candidates for configuration values described above.

(3) In NR Rel. 18, repetition transmission of PUCCH by which HARQ-ACK for Msg.4 PDSCH is transmitted is being considered. The Msg.3 PUSCH described in each of the embodiments above may be replaced with PUCCH, and each of the embodiments may be applied to the method for determining the number of Repetitions of PUCCH by which HARQ-ACK for Msg.4 PDSCH is transmitted.

Further, in addition to the embodiment described in each of the embodiments described above, the Msg.3 PUSCH may be replaced with PUCCH, and each of the embodiments may be applied to the method for determining the number of Repetitions of PUCCH by which HARQ-ACK for Msg.4 PDSCH is transmitted. That is, the method for determining the number of Repetitions in each of the embodiments described above may be applied to both Msg.3 PUSCH and PUCCH by which HARQ-ACK for Msg.4 PDSCH is transmitted. Further, different embodiments may be applied to Msg.3 PUSCH, and PUCCH by which HARQ-ACK for Msg.4 PDSCH is transmitted, respectively.

For example, in a case where each embodiment is applied to a method for determining the number of Repetitions of PUCCH by which HARQ-ACK for Msg.4 PDSCH is transmitted, by replacing the Msg.3 PUSCH described in each embodiment described above with PUCCH, terminal 200 to which PRACH repetition is applied may perform an operation of requesting Msg.4 PUCCH repetition.

Further, it is also assumed that the PRACH and the PUCCH by which HARQ-ACK for Msg.4 PDSCH is transmitted has the same coverage or the PRACH is a channel for which coverage improvement is desired more than the PUCCH. Then, the same parameter may be applied to the threshold for the application of the Repetition of the PRACH repetition and the PUCCH repetition by which HARQ-ACK for Msg.4 PDSCH is transmitted. Further, the threshold for PRACH may be set to a value greater than the threshold for PUCCH by which HARQ-ACK for Msg.4 PDSCH is transmitted.

(4) In each of the embodiments described above, the number of bits (for example, 2 MSBs) in the MCS field reused to indicate the number of Repetitions is merely an example, and another number of bits may be reused. For example, the number of bits in the MCS field is not limited to four bits or five bits, and may be another number of bits, and the number of bits reused for indicating the number of Repetitions in the MCS field is not limited to two bits, and may be one bit or three bits or more. Further, the bit position reused to indicate the number of Repetitions in the MCS field is not limited to the MSB, and may be another bit position.

Further, the RRC parameter names (for example, rsrp-ThresholdMsg3, rsrp-ThresholdPRACHrepetition, rsrp-ThresholdPRACHrepetitionMoreLevel, level-prach-For-msg3repetition, and the like) in each of the embodiments described above are merely examples, and another parameter name may be used.

Further, the number of Repetitions (for example, 1, 2, 4, 8, 12, 16) in each of the embodiments described above is merely an example, and another number may be configured.

(5) In each of the embodiments described above, the transmission of PRACH, PUSCH, or PUCCH has been described as the uplink transmission, but the channel used for the uplink transmission is not limited to PRACH, PUSCH, and PUCCH, and may be another channel. Further, the type of information to be transmitted may be either data or an uplink control signal. Further, an exemplary embodiment of the present disclosure is not limited to the uplink transmission, and may be applied to downlink transmission or sidelink transmission.

Further, in the present disclosure, Repetition may also be referred to as, for example, slot aggregation, slot bundling, TTI aggregation, or TTI bundling.

The present disclosure may be applied to, for example, communication between terminals, such as sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

(Complement)

Information indicating whether terminal 200 supports the functions, operations, or pieces of processing that have been indicated in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

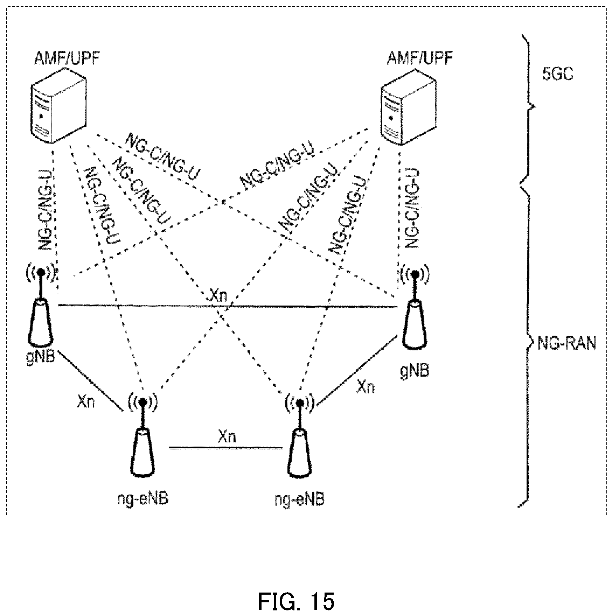

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 15 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability ($1\text{-}10^{-5}$ within 1 ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

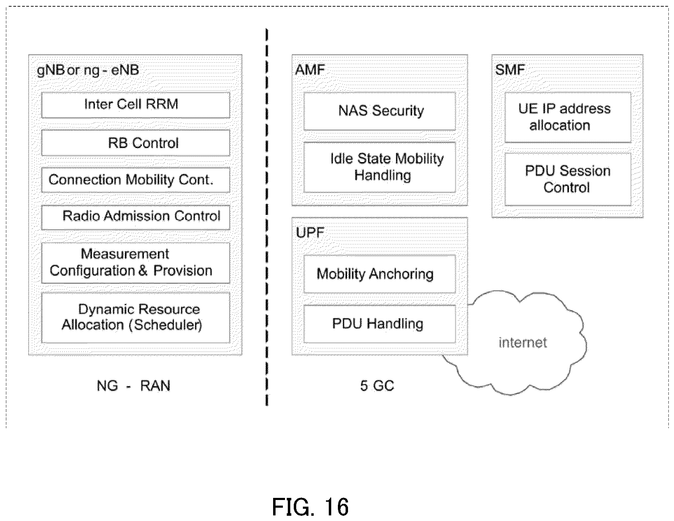

FIG. 16 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

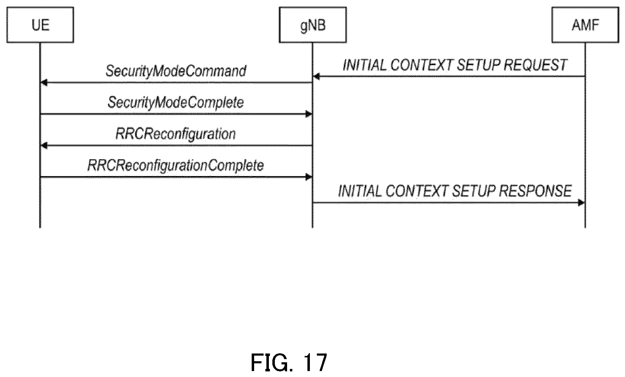

FIG. 17 illustrates some interactions between a UE, gNB, and AMF (5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

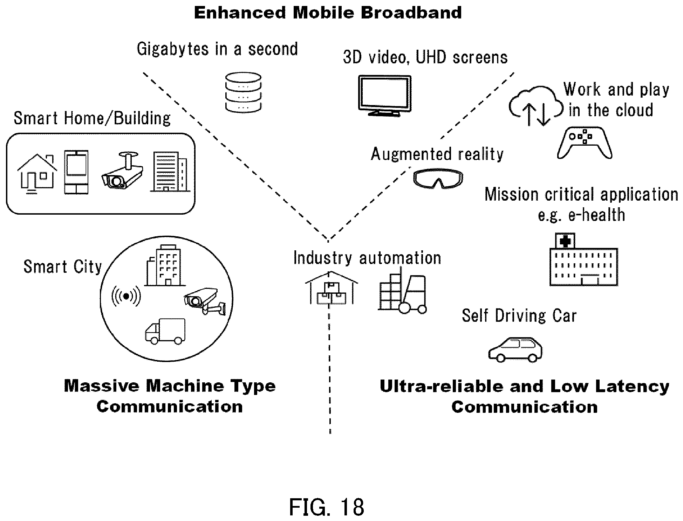

FIG. 18 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 18 illustrates some examples of envisioned usage scenarios for IMT for 2020 and beyond (see e.g., ITU-R M.2083, FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to $10^{-6}$ level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 17. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

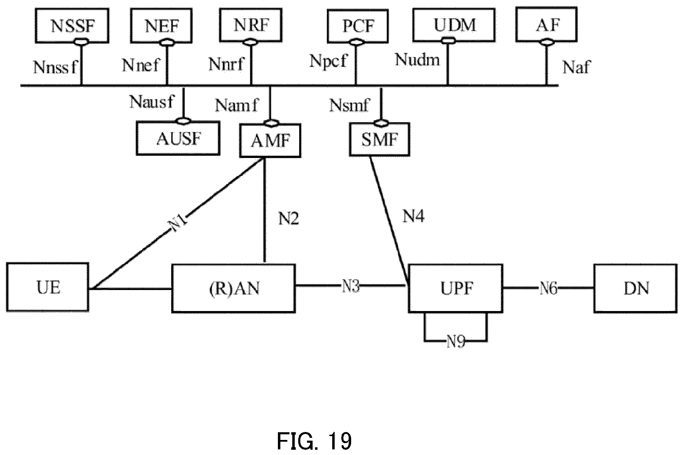

FIG. 19 illustrates a 5G NR non-roaming reference architecture (see TS 23.501 v16.1.0, section 4.23). An Application Function (AF) (e.g., external application server hosting 5G services, as illustrated in FIG. 18) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 19 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an embodiment of the present disclosure includes: control circuitry, which, in operation, performs transmission control of a certain signal based on a condition related to repetition transmission of a first signal, the certain signal being referred to as a second signal; and transmission circuitry, which, in operation, transmits the second signal in accordance with the transmission control.

In the embodiment of the present disclosure, the condition is a condition related to received quality for performing the repetition transmission of the first signal, and the control circuitry determines a request for repetition transmission of the second signal in a case where the received quality is equal to or less than a threshold.

In the embodiment of the present disclosure, the control circuitry, in a case where the request for the repetition transmission of the second signal is made, determines a number of repetition transmissions of the second signal based on one or some of bits in a Modulation and Coding Scheme (MCS) field included in allocation information for the second signal, and determines an MCS index based on a remaining bit in the MCS field, regardless of whether the repetition transmission of the first signal is performed.

In the embodiment of the present disclosure, the control circuitry determines one set from a plurality of sets of candidates for a configuration value of a parameter related to transmission of the second signal based on the condition.

In the embodiment of the present disclosure, the plurality of sets includes a first set and a second set different from the first set.

In the embodiment of the present disclosure, the condition is a condition related to received quality for performing the repetition transmission of the first signal, and the control circuitry determines which of the first set and the second set to be used based on a comparison between the received quality and a threshold.

In the embodiment of the present disclosure, the condition is a condition related to a level of the repetition transmission of the first signal, and the control circuitry determines which of the first set and the second set to be used based on the level.

In the embodiment of the present disclosure, the plurality of sets includes a first set and a second set calculated from the first set.

A base station according to an embodiment of the present disclosure includes: control circuitry, which, in operation, performs reception control of a certain signal based on a condition related to repetition transmission of a first signal, the certain signal being referred to as a second signal; and reception circuitry, which, in operation, receives the second signal in accordance with the reception control.

**In** a communication method according to an embodiment of the present disclosure, a terminal performs transmission control of a certain signal based on a condition related to repetition transmission of a first signal, the certain signal being referred to as a second signal, and transmits the second signal in accordance with the transmission control.

**In** a communication method according to an embodiment of the present disclosure, a base station performs reception control of a certain signal based on a condition related to repetition transmission of a first signal, the certain signal being referred to as a second signal, and receives the second signal in accordance with the reception control.

An integrated circuit according to an embodiment of the present disclosure controls a process of a terminal, and the process includes: performing transmission control of a certain signal based on a condition related to repetition transmission of a first signal, the certain signal being referred to as a second signal; and transmitting the second signal in accordance with the transmission control.

An integrated circuit according to an embodiment of the present disclosure controls a process of a base station, and the process includes: performing reception control of a certain signal based on a condition related to repetition transmission of a first signal, the certain signal being referred to as a second signal; and receiving the second signal in accordance with the reception control.

The disclosure of Japanese Patent Application No. 2022-177132, filed on November 4, 2022, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102, 206 Signal generator
103, 207 Transmitter
104, 201 Receiver
105, 202 Extractor
106, 203 Demodulator
107, 204 Decoder
200 Terminal

**Claims**

1. A terminal, comprising:

   control circuitry, which, in operation, performs transmission control of a certain signal based on a condition related to repetition transmission of a first signal, the certain signal being referred to as a second signal; and
   transmission circuitry, which, in operation, transmits the second signal in accordance with the transmission control.

2. The terminal according to claim 1, wherein

   the condition is a condition related to received quality for performing the repetition transmission of the first signal, and
   the control circuitry determines a request for repetition transmission of the second signal in a case where the received quality is equal to or less than a threshold.

3. The terminal according to claim 2, wherein

the control circuitry, in a case where the request for repetition transmission of the second signal is made, determines a number of repetition transmissions of the second signal based on one or some of bits in a Modulation and Coding Scheme (MCS) field included in allocation information for the second signal, and determines an MCS index based on a remaining bit in the MCS field, regardless of whether the repetition transmission of the first signal is performed.

4. The terminal according to claim 1, wherein
the control circuitry determines one set from a plurality of sets of candidates for a configuration value of a parameter related to transmission of the second signal based on the condition.

5. The terminal according to claim 4, wherein
the plurality of sets includes a first set and a second set different from the first set.

6. The terminal according to claim 5, wherein

the condition is a condition related to received quality for performing the repetition transmission of the first signal, and
the control circuitry determines which of the first set and the second set to be used based on a comparison between the received quality and a threshold.

7. The terminal according to claim 5, wherein

the condition is a condition related to a level of the repetition transmission of the first signal, and
the control circuitry determines which of the first set and the second set to be used based on the level.

8. The terminal according to claim 4, wherein
the plurality of sets includes a first set and a second set calculated from the first set.

9. A base station, comprising:

control circuitry, which, in operation, performs reception control of a certain signal based on a condition related to repetition transmission of a first signal, the certain signal being referred to as a second signal; and
reception circuitry, which, in operation, receives the second signal in accordance with the reception control.

10. A communication method, comprising:

performing, by a terminal, transmission control of a certain signal based on a condition related to repetition transmission of a first signal, the certain signal being referred to as a second signal; and
transmitting, by the terminal, the second signal in accordance with the transmission control.

11. A communication method, comprising:

performing, by a base station, reception control of a certain signal based on a condition related to repetition transmission of a first signal, the certain signal being referred to as a second signal; and
receiving, by the base station, the second signal in accordance with the reception control.

12. An integrated circuit that controls a process of a terminal, the process comprising:

performing transmission control of a certain signal based on a condition related to repetition transmission of a first signal, the certain signal being referred to as a second signal; and
transmitting the second signal in accordance with the transmission control.

13. An integrated circuit that controls a process of a base station, the process comprising:

performing reception control of a certain signal based on a condition related to repetition transmission of a first signal, the certain signal being referred to as a second signal; and
receiving the second signal in accordance with the reception control.

RSRP

MCS information filed (4 bits)

Selecting MCS index

rsrp-ThresholdMsg3 — — — — — — — UE does not request Msg.3 repetition — — — — — — — — —

UE requests Msg.3 repetition

MCS information filed (4 bits)

Selecting repetition factor

Selecting MCS index

FIG. 1

EP 4 615 135 A1

100

CONTROLLER → RECEIVER

FIG. 2

200

CONTROLLER → TRANSMITTER

FIG. 3

| | Compared with rsrp-ThresholdRACHrepetition | Compared with rsrp-ThresholdMsg3 | PRACH transmission | Msg.3 (How to interpret MCS field) |
|---|---|---|---|---|
| Case 1 | RSRP is higher | RSRP is higher | Normal (no repetition) | MCS is normal manner (no repetition factor). |
| Case 2 | RSRP is higher | RSRP is lower | Normal (no repetition) | MCS and repetition number are determined based on Rel17 MCS field interpretation. |
| Case 3 | RSRP is lower | RSRP is lower | Repetition | MCS and repetition number are determined based on Rel17 MCS field interpretation. |

RSRP

------ rsrp-ThresholdMsg3

------ rsrp-ThresholdPRACHrepetition

FIG. 4

```
                           Start

                              │
                              ▼
┌─────────────────────────────────────────────────────────┐  S101
│ Acquire rsrp-ThresholdPRACHrepetition and rsrp-ThresholdMsg3 │
└─────────────────────────────────────────────────────────┘
                              │
                              ▼
                           S102
                    ◇ RSRP>rsrp-           ◇  ── No ──┐
                    ThresholdRACHrepetition          │
                              │                       │
                            Yes                       │
                              ▼                       │
          ┌──────────────────────┐ S103              │
          │ Legacy PRACH transmission │               ▼
          │     (no repetition)       │   ┌──────────────────────────────┐ S104
          └──────────────────────┘       │ PRACH transmission with repetition │
                              │           └──────────────────────────────┘
                              ▼                       │
                           S105                       │
                 ◇ RSRP>rsrp-ThresholdMsg3 ◇ ── No ──┤
                              │                       │
                            Yes                       │
                              ▼                       ▼
  ┌──────────────────────────────┐ S106   ┌──────────────────────────────┐ S109
  │ Acquire scheduling information │       │ Acquire scheduling information │
  │        of Msg.3 PUSCH          │       │        of Msg.3 PUSCH          │
  └──────────────────────────────┘        └──────────────────────────────┘
                              │ S107                   │
                              ▼                        ▼
  ┌──────────────────────────────┐        ┌────────────────────────────────────────┐ S110
  │ Acquire MCS index using       │       │ Acquire the number of Repetitions and MCS index │
  │     MCS field (4 bits)         │       │         using MCS field (4 bits)         │
  └──────────────────────────────┘        └────────────────────────────────────────┘
                              │ S108                   │
                              ▼                        ▼
  ┌──────────────────────────────┐        ┌──────────────────────────────┐ S111
  │   Msg.3 PUSCH transmission    │        │   Msg.3 PUSCH transmission    │
  └──────────────────────────────┘        └──────────────────────────────┘
                              │                        │
                              └────────────┬───────────┘
                                           ▼
                                          End
```

FIG. 5

|  | Legacy configured set | Additional configured set |
|---|---|---|
| Repetition factor | {1, 2, 4, 8} | {4, 8, 12, 16} |
| MCS | {MCS2, MCS4, MCS6, MCS8} | {MCS0, MCS1, MCS2, MCS3} |

FIG. 6

| | Compared with rsrp-ThresholdRACHrepetitionMoreLevel | Compared with rsrp-ThresholdRACHrepetition | Compared with rsrp-ThresholdMsg3 | PRACH transmission | Msg.3 (How to interpret MCS field) |
|---|---|---|---|---|---|
| Case 1 | RSRP is higher | RSRP is higher | RSRP is higher | Normal (no repetition) | MCS is normal manner (no repetition factor). |
| Case 2 | RSRP is higher | RSRP is higher | RSRP is lower | Normal (no repetition) | MCS and repetition number are determined based on Rel17 MCS field interpretation with legacy configured set. |
| Case 3 | RSRP is higher | RSRP is lower | RSRP is lower | Repetition | MCS and repetition number are determined based on Rel17 MCS field interpretation with legacy configured set. |
| Case 4 | RSRP is lower | RSRP is lower | RSRP is lower | Repetition | MCS and repetition number are determined based on Rel17 MCS field interpretation with additional configured set. |

RSRP

⋯⋯rsrp-ThresholdMsg3

⋯⋯rsrp-ThresholdPRACHrepetition

⋯⋯rsrp-ThresholdPRACHrepetitionMoreLevel

FIG. 7

Start

S201 Acquire rsrp-ThresholdPRACHrepetition, rsrp-ThresholdMsg3, and rsrp-ThresholdPRACHrepetitionMoreLevel, and acquire Additional configured set

S202 RSRP>rsrp-ThresholdRACHrepetition

Yes →

No ↓ S204 PRACH transmission with repetition

S203 Legacy PRACH transmission (no repetition)

S205 RSRP>rsrp-ThresholdMsg3

Yes ↓

No ↓

**From S205 (Yes):**
S206 Acquire scheduling information of Msg.3 PUSCH
S207 Acquire MCS index using MCS field (4 bits)
S208 Msg.3 PUSCH transmission

S209 RSRP>rsrp-ThresholdRACHrepetitionMoreLevel

Yes ↓

No →

**From S209 (Yes):**
S210 Acquire scheduling information of Msg.3 PUSCH
S211 Acquire the number of Repetitions and MCS index using Legacy configured set and MCS field (4 bits)
S212 Msg.3 PUSCH transmission

**From S209 (No):**
S213 Acquire scheduling information of Msg.3 PUSCH
S214 Acquire the number of Repetitions and MCS index using Additional configured set and MCS field (4 bits)
S215 Msg.3 PUSCH transmission

End

FIG. 8

33

| | PRACH repetition level | Compared with rsrp-ThresholdMsg3 | PRACH transmission | Msg.3 (How to interpret MCS field) |
|---|---|---|---|---|
| Case 1 | Level 0 | RSRP is higher | Normal (no repetition) | MCS is normal manner (no repetition factor). |
| Case 2 | Level 0 | RSRP is lower | Normal (no repetition) | MCS and repetition number are determined based on Rel17 MCS field interpretation with legacy configured set. |
| Case 3 | Level 1 | RSRP is lower | Repetition | MCS and repetition number are determined based on Rel17 MCS field interpretation with legacy configured set. |
| Case 4 | Level 2 | RSRP is lower | Repetition | MCS and repetition number are determined based on Rel17 MCS field interpretation with additional configured set. |

RSRP

----- rsrp-ThresholdMsg3

----- rsrp-ThresholdPRACHrepetition1

----- rsrp-ThresholdPRACHrepetition2

FIG. 9

EP 4 615 135 A1

FIG. 10

**Start**

Acquire information on rsrp-ThresholdPRACHrepetition and PRACH coverage/repetition level, rsrp-ThresholdMsg3, and level-prach-For-msg3repetition, and acquire Additional configured set — S301

Measure RSRP and determine PRACH coverage level — S302

Transmit PRACH according to PRACH coverage level — S303

S304 — RSRP>rsrp-ThresholdMsg3

**Yes** →

Acquire scheduling information of Msg.3 PUSCH — S305

Acquire MCS index using MCS field (4 bits) — S306

Msg.3 PUSCH transmission — S307

**No** →

S308 — PRACH coverage/repetition level is lower than level-prach-For-msg3repetition

**Yes** →

Acquire scheduling information of Msg.3 PUSCH — S309

Acquire the number of Repetitions and MCS index using Legacy configured set and MCS field (4 bits) — S310

Msg.3 PUSCH transmission — S311

**No** →

Acquire scheduling information of Msg.3 PUSCH — S312

Acquire the number of Repetitions and MCS index using Additional configured set and MCS field (4 bits) — S313

Msg.3 PUSCH transmission — S314

**End**

| | Legacy configured set | Scaling factor |
|---|---|---|
| Repetition factor | {1, 2, 4, 8} | 2 |
| MCS | {MCS2, MCS4, MCS6, MCS8} | 2 |

FIG. 11

EP 4 615 135 A1

FIG. 12

EP 4 615 135 A1

FIG. 13

| | Compared with Y | Compared with X | Compared with rsrp-ThresholdMsg3 | PRACH transmission | Msg.3 (How to interpret MCS field) |
|---|---|---|---|---|---|
| Case 1 | RSRP difference from rsrp-Threshold is smaller. | RSRP difference from rsrp-Threshold is smaller. | RSRP is higher | Normal (no repetition) | MCS is normal manner (no repetition factor). |
| Case 2 | RSRP difference from rsrp-Threshold is larger. | RSRP difference from rsrp-Threshold is smaller. | RSRP is lower | Normal (no repetition) | MCS and repetition number are determined based on Rel17 MCS field interpretation with legacy configured set. |
| Case 3 | RSRP difference from rsrp-Threshold is larger. | RSRP difference from rsrp-Threshold is larger. | RSRP is lower | Repetition | MCS and repetition number are determined based on Rel17 MCS field interpretation with legacy configured set. |
| Case 4 | RSRP difference from rsrp-Threshold is larger. | RSRP difference from rsrp-Threshold is larger. | RSRP is lower | Repetition | MCS and repetition number are determined based on Rel17 MCS field interpretation with additional configured set. |

FIG. 14

FIG. 15

gNB or ng - eNB

| Inter Cell RRM |

| RB Control |

| Connection Mobility Cont. |

| Radio Admission Control |

| Measurement Configuration & Provision |

| Dynamic Resource Allocation (Scheduler) |

NG - RAN

AMF

| NAS Security |

| Idle State Mobility Handling |

UPF

| Mobility Anchoring |

| PDU Handling |

SMF

| UE IP address allocation |

| PDU Session Control |

internet

5 GC

FIG. 16

FIG. 17

**Enhanced Mobile Broadband**

Gigabytes in a second    3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 18

FIG. 19

## INTERNATIONAL SEARCH REPORT

| | International application No. |
| --- | --- |
| | **PCT/JP2023/036280** |

| A. | CLASSIFICATION OF SUBJECT MATTER |
| --- | --- |

*H04W 74/08*(2024.01)i; *H04W 28/18*(2009.01)i; *H04W 72/1268*(2023.01)i; *H04W 72/54*(2023.01)i
FI: H04W74/08; H04W28/18; H04W72/1268; H04W72/54

According to International Patent Classification (IPC) or to both national classification and IPC

| B. | FIELDS SEARCHED |
| --- | --- |

Minimum documentation searched (classification system followed by classification symbols)

    H04W74/08; H04W28/18; H04W72/1268; H04W72/54

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | Moderator (ZTE CORPORATION). Feature lead summary #4 on support of Type A PUSCH repetitions for Msg3. 3GPP TSG-RAN WG1 Meeting #107-e R1-2112836, [online]. 21 November 2021, pp. 1, 45-52, [retrieved on 04 December 2023], Retrieved from <https://www.3gpp.org/ftp/tsg_ran/WG1_RL1/TSGR1_107-e/Docs/R1-2112836.zip> <br>     2.6 Support of PUSCH repetition for CFRA PUSCH scheduled by RAR UL grant. [pp. 45-52] | 1, 10, 12 |
| Y | | 2-8, 9, 11, 13 |
| Y | ZTE. [CHANGE REQUEST] Draft 38.213 CR on Msg3 repetition. 3GPP TSG-RAN WG1 Meeting # 110 R1-2207485, [online]. 12 August 2022, pp. 1-2, [retrieved on 04 December 2023], Retrieved from <https://www.3gpp.org/ftp/tsg_ran/WG1_RL1/TSGR1_110/Docs/R1-2207485.zip> <br>     Reason for change, p. 1, 8.3 PUSCH scheduled by RAR UL grant, p. 2 | 2-3, 9, 11, 13 |
| Y | LG ELECTRONICS. Discussion on PRACH repeated transmission for NR coverage enhancement. 3GPP TSG-RAN WG1 Meeting #110bis-e R1-2209803, [online]. 30 September 2022, pp. 1-4, [retrieved on 04 December 2023], Retrieved from <https://www.3gpp.org/ftp/tsg_ran/WG1_RL1/TSGR1_110b-e/Docs/R1-2209803.zip> <br>     2. Discussion [pp. 1-3] | 4-8 |

☑ Further documents are listed in the continuation of Box C.     ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 December 2023** | **19 December 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| --- |
| **PCT/JP2023/036280** |

### C.    DOCUMENTS CONSIDERED TO BE RELEVANT

| Category* | Citation of document, with indication, where appropriate, of the relevant passages | Relevant to claim No. |
| --- | --- | --- |
| Y | ZTE. Discussion on PRACH coverage enhancements. 3GPP TSG-RAN WG1 Meeting #110bis-e R1-2208488, [online]. 30 September 2022, pp. 1-4, [retrieved on 04 December 2023], Retrieved from <https://www.3gpp.org/ftp/tsg_ran/WG1_RL1/TSGR1_110b-e/Docs/R1-2208488.zip> 2.1 Determination of the number of PRACH repetitions, pp. 1-4 | 8 |

Form PCT/ISA/210 (second sheet) (January 2015)

**EP 4 615 135 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022177132 A

**Non-patent literature cited in the description**

- NR Base Station (BS) radio transmission and reception (Release 15). *3GPP TS38.104 V15.18.0*, September 2022
- **CHINA TELECOM**. New WID on NR coverage enhancements. *RP-202928*, December 2020
- **CHINA TELECOM**. Revised WID on Further NR coverage enhancements. *RP-220937*, March 2022
- NR Physical channels and modulation (Release 17). *3GPP TS38.211 V17.3.0*, September 2022
- NR Multiplexing and channel coding (Release 17). *3GPP TS38.212 V17.3.0*, September 2022
- NR Physical layer procedures for control (Release 17). *3GPP TS38.213 V17.3.0*, September 2022
- NR Physical layer procedures for data (Release 17). *3GPP TS38.214 V17.3.0*, September 2022